(19) Europäisches Patentamt
European Patent Office
Office européen des brevets

(11) Publication number: **0 230 944 B1**

(12) **EUROPEAN PATENT SPECIFICATION**

(45) Date of publication of the patent specification: **07.02.90**

(51) Int. Cl.[4]: **C07F 9/547,** A61K 31/675

(21) Application number: **87100602.9**

(22) Date of filing: **19.01.87**

(54) **Dihydropyridine-5-phosphonic acid cyclic propylene ester.**

(30) Priority: **22.01.86 JP 11255/86**
**23.01.86 JP 12755/86**
**25.11.86 JP 280159/86**
**14.04.86 US 851158**

(43) Date of publication of application:
**05.08.87 Bulletin 87/32**

(45) Publication of the grant of the patent:
**07.02.90 Bulletin 90/6**

(84) Designated Contracting States:
**AT BE CH DE ES FR GB GR IT LI LU NL SE**

(56) References cited:
**EP-A- 0 141 221**
**EP-A- 0 141 222**

**The file contains technical information submitted after the application was filed and not included in this specification**

(73) Proprietor: **NISSAN CHEMICAL INDUSTRIES LTD., 3-7-1, Kanda Nishiki-cho, Chiyoda-ku Tokyo(JP)**

(72) Inventor: **Seto, Kiyotomo Nissan Chemical Industries Ltd., Chuo Kenkyusho 722-1, Tsuboi-cho, Funabashi-shi Chiba-ken(JP)**
Inventor: **Tanaka, Sakuya Nissan Chemical Industries Ltd., Seibutsukagaku Kenkyusho, No. 1470, Ooaza shiraoka, Minamisaitama-gun Saitama-ken(JP)**
Inventor: **Sakoda, Ryozo Nissan Chemical Industries Ltd., Chuo Kenkyusho 722-1, Tsuboi-cho, Funabashi-shi Chiba-ken(JP)**
Inventor: **Sakai, Tosinori Nissan Chemical Industries Ltd., Seibutsukagaku Kenkyusho, No. 1470, Ooaza shiraoka, Minamisaitama-gun Saitama-ken(JP)**
Inventor: **Masuda, Yukinori Nissan Chemical Industries Ltd., Seibutsukagaku Kenkyusho, No. 1470, Ooaza shiraoka, Minamisaitama-gun Saitama-ken(JP)**

(74) Representative: **Wächtershäuser, Günter, Dr., Tal 29, D-8000 München 2(DE)**

**EP 0 230 944 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a novel l,4-dihydropyridine-5-phosphonic acid cyclic propylene ester or its pharmaceutically acceptable salt, or a solvate of the ester or the salt, a process for the preparation thereof, and an antihypertensive agent or coronary or cerebral vasodilator composition containing the novel ester or its pharmaceutically acceptable salt, or a solvate of the ester or the salt.

l,4-Dihydropyridine-5-phosphonic acid esters are known to be useful for the medical treatment of coronary heart diseases, cerebral diseases, hypertension or arrhythmia, as they are capable of inhibiting the contraction of smooth muscle and cardiac muscle by calcium antagonistic effects. (See European Patent Publications EP-A 0159040, EP-A 0121117, EP-A 0141222 and EP-A 0141221, and Japanese Patent Publication 60-069089.)

The present invention provides a novel compound of the formula:

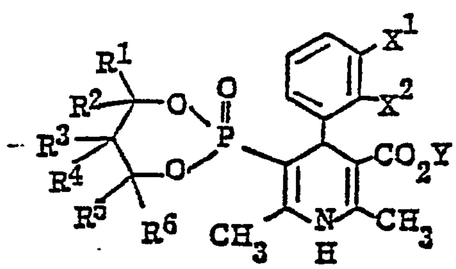

(I)

wherein each of $R^1$, $R^2$, $R^3$, $R^4$, $R^5$ and $R^6$ which may be the same or different, is hydrogen or $C_1$–$C_4$ alkyl; one of $X^1$ and $X^2$ is nitro, fluorine, chlorine, difluoromethoxy or trifluoromethyl and the other is hydrogen, or both of $X^1$ and $X^2$ are chlorine; and Y is

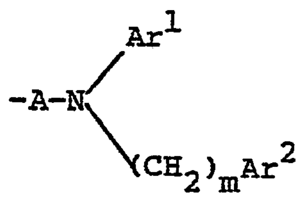

wherein A is $C_2$–$C_6$ alkylene, each of $Ar^1$ and $Ar^2$ which may be the same or different, is phenyl which may be substituted by chlorine, fluorine or $C_1$–$C_3$ alkoxy, and m is an integer of from 0 to 4, or Y is

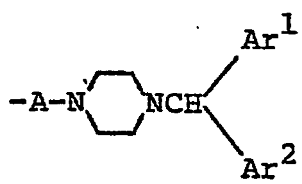

wherein A, $Ar^1$ and $Ar^2$ are as defined above when $X^1$ is hydrogen and $X^2$ is difluoromethoxy, or when both $X^1$ and $X^2$ are chlorine; or a pharmaceutically acceptable salt thereof, or a solvate of the compound or the salt.

Some of the compounds of the formula I have optical isomers or diastereomers. The present invention covers such optical isomers and diastereomers.

The present invention also provides an antihypertensive agent or coronary or cerebral vasodilator composition comprising an effective amount of the compound of the formula I or its pharmaceutically acceptable salt, or a solvate of the compound or the salt, and a pharmaceutically acceptable diluent or carrier.

The substituents in the formula I of the compounds of the present invention will be further illustrated as hereunder.

Examples of $R^1$, $R^2$, $R^3$, $R^4$, $R^5$ and $R^6$ in the formula I are hydrogen, methyl, ethyl, n-propyl and i-propyl.

And preferred examples of

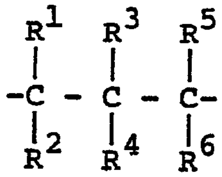 in the formula I are

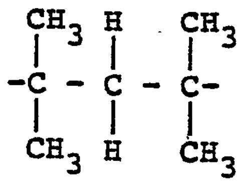 , 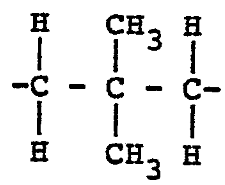 and 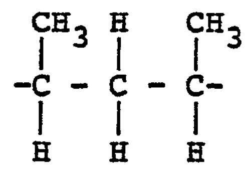 .

Examples of $X^1$ and $X^2$ in the formula I are hydrogen, nitro, chlorine, fluorine, difluoromethoxy and trifluoromethyl. Preferred examples of $X^1$ and $X^2$ in the formula I are hydrogen, nitro and chlorine.

Examples of A are $-CH_2CH_2-$, $-CH_2CH_2CH_2-$, $-CH_2CH_2CH_2CH_2-$, $-CH_2CH_2CH_2CH_2CH_2-$, $-CH_2CH_2CH_2CH_2CH_2CH_2-$, $-CH(CH_3)CH_2-$, $-CH(CH_3)CH(CH_3)-$, $-C(CH_3)_2CH_2-$ and $-CH_2C(CH_3)_2CH_2-$. Preferred examples of A are $-CH_2CH_2-$, $-CH_2CH_2CH_2-$ and $-CH(CH_3)CH_2-$.

Examples of $Ar^1$ and $Ar^2$ are phenyl, fluorophenyl, chlorophenyl, dichlorophenyl, methoxyphenyl, dimethoxyphenyl, trimethoxyphenyl, ethoxyphenyl and diethoxyphenyl. Preferred examples of $Ar^1$ and $Ar^2$ are phenyl or p-fluorophenyl.

The compound of the present invention can be prepared in accordance with the flow chart of the following Scheme 1.

Scheme 1

Method (a)

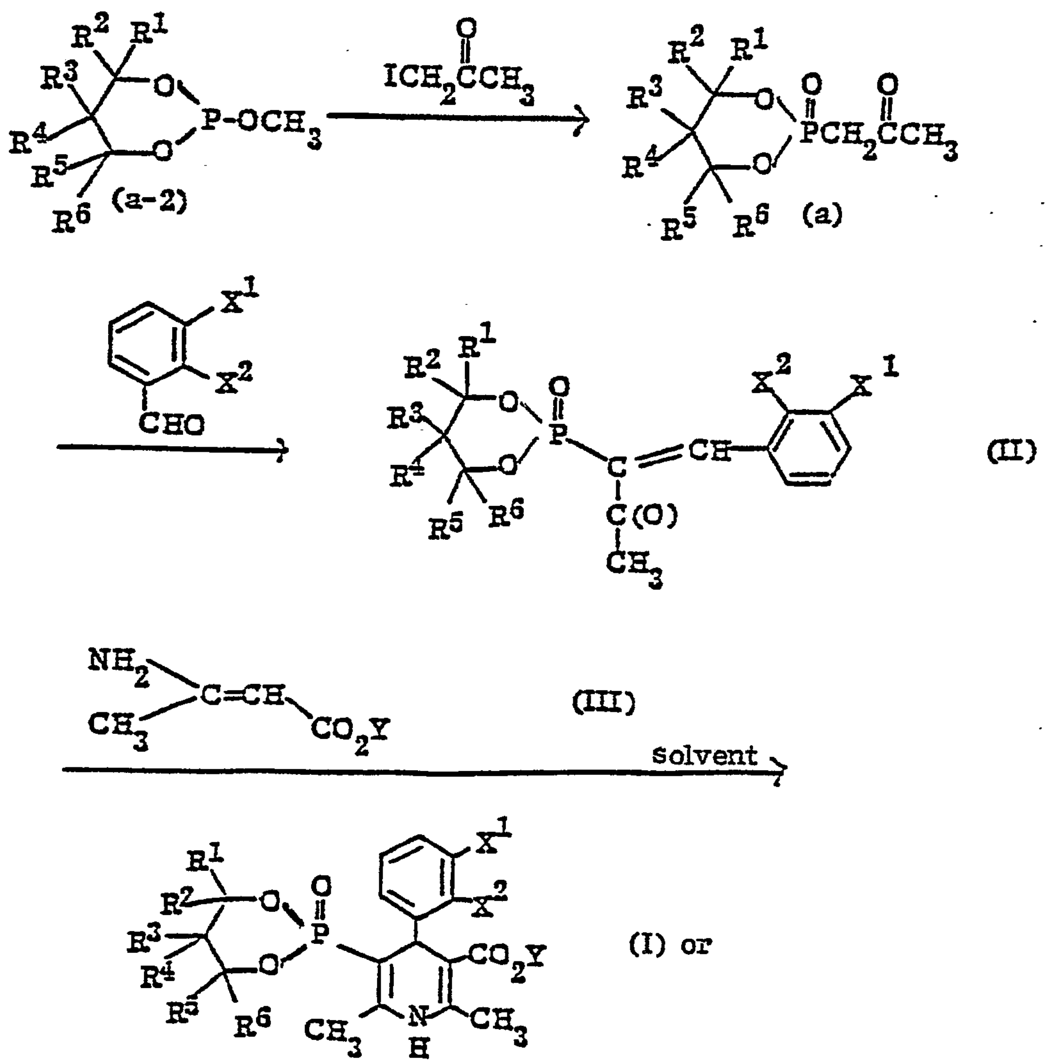


(a-2)

(a)

(II)

(III)

(I) or

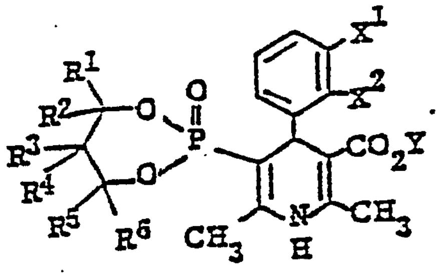

• solvent (VI)

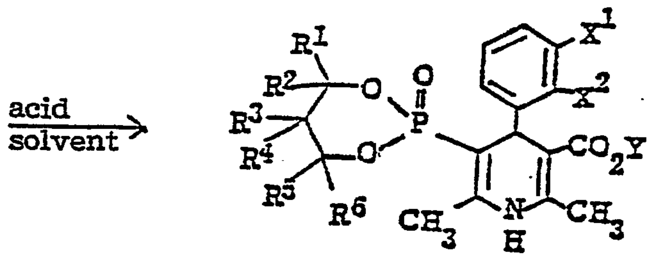


• acid (IV)

or

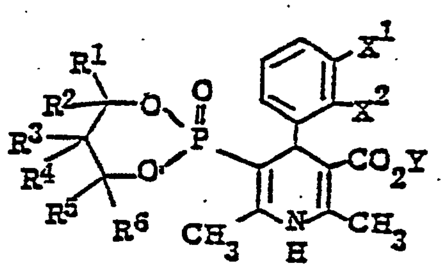

• acid·solvent (V)

In Scheme 1, $R^1$, $R^2$, $R^3$, $R^4$, $R^5$, $R^6$, $X^1$, $X^2$ and Y have the same meanings as defined with respect to the formula I.

The acetonyl phosphonic acid cyclic propylene ester (a) can be prepared by means of a conventional technique (see D.W. White, J. Am. Chem. Soc., 92, 7125–7135 (1970)). Namely, as shown by Scheme 1, it is obtainable by the reaction of a 1-methoxy-1-phospha-2,6-dioxa-cyclohexane derivative (a-2) with iodoacetone.

The compounds of the present invention of the formula I can be obtained by reacting the compound of the formula II with the compound of the formula III in an inert solvent in accordance with the above Scheme I. The starting compound of the formula II is obtainable by reacting the acetonyl phosphonic acid cyclic ester (a) with a benzaldehyde derivative by means of a conventional technique. Likewise, the starting compound of the formula III can readily be obtained by reacting the corresponding carbonyl compound with ammonia. The starting compound of the formula III may be formed in the reaction system simply by mixing the corresponding carbonyl compound with ammonia and is not necessarily required to be isolated.

The inert solvent includes an alcohol solvent such as methanol, ethanol, propanol or isopropanol, an ether solvent such as l,2-dimethoxyethane or THF, an aromatic hydrocarbon solvent such as benzene, toluene or xylene, a nitrile solvent such as acetonitrile or benzonitrile, an amide solvent such as DAM, DMF or N-methylpyrrolidone, a sulfoxide solvent such as DMSO or sulfolane, an ester solvent such as ethyl acetate or butyrolactone, or pyridine.

The reaction is usually conducted at a temperature of from room temperature to 200°C, preferably from 60 to I40°C, for from I to I00 hours, preferably from 5 to 20 hours.

The resulting compound of the formula I may form a solvate of the formula VI depending upon the type of the solvent used or the type of the compound of the formula I. (See Example I3.)

The salt of the formula IV may be obtained by reacting a compound of the formula I or VI with an acid in the presence of an inert solvent. As the acid, there may be employed an acid capable of forming a pharmaceutically acceptable salt, such as hydrogen chloride, sulfuric acid, nitric acid, succinic acid, acetic acid or lactic acid. For the purpose of facilitating the purification of the compound of the formula I, however, it is possible to use other strong acids, such as hydrogen bromide, trifluoroacetic acid, methanesulfonic acid, benzenesulfonic acid, toluenesulfonic acid or naphthalenesulfonic acid.

Depending upon the type of the compound of the formula I and the type of the solvent for the salt-forming reaction, it is possible that instead of a salt of the formula IV, a solvate of such a salt having the formula V forms. (See Example l4.)

As mentioned above, the compound of the formula VI is a solvate of the compound of the formula I. As the solvent for such a solvate, benzene or toluene may be mentioned. Xylenes may also be useful as solvents for solvates.

Referring to the following Scheme 2, a solvate of the formula VI–1-Toluene is formed by the reaction of a compound of the formula II–1 with a compound of the formula III–1 in toluene, and precipitates. The solvate of the formula VI–1-Toluene is an adduct of 1 mol of the compound of the formula I–1 with 1 mol of toluene. The solubility of this solvate in toluene is extremely low at a level of about 0.02% by weight at 20°C. Accordingly, it is possible to readily remove toluene-soluble impurities by precipitating the solvate from the toluene reaction solution, followed by washing with toluene. Further, it is possible to obtain the solvate in good yield from the toluene reaction solution, since the solvate has a low solubility in toluene.

Scheme 2

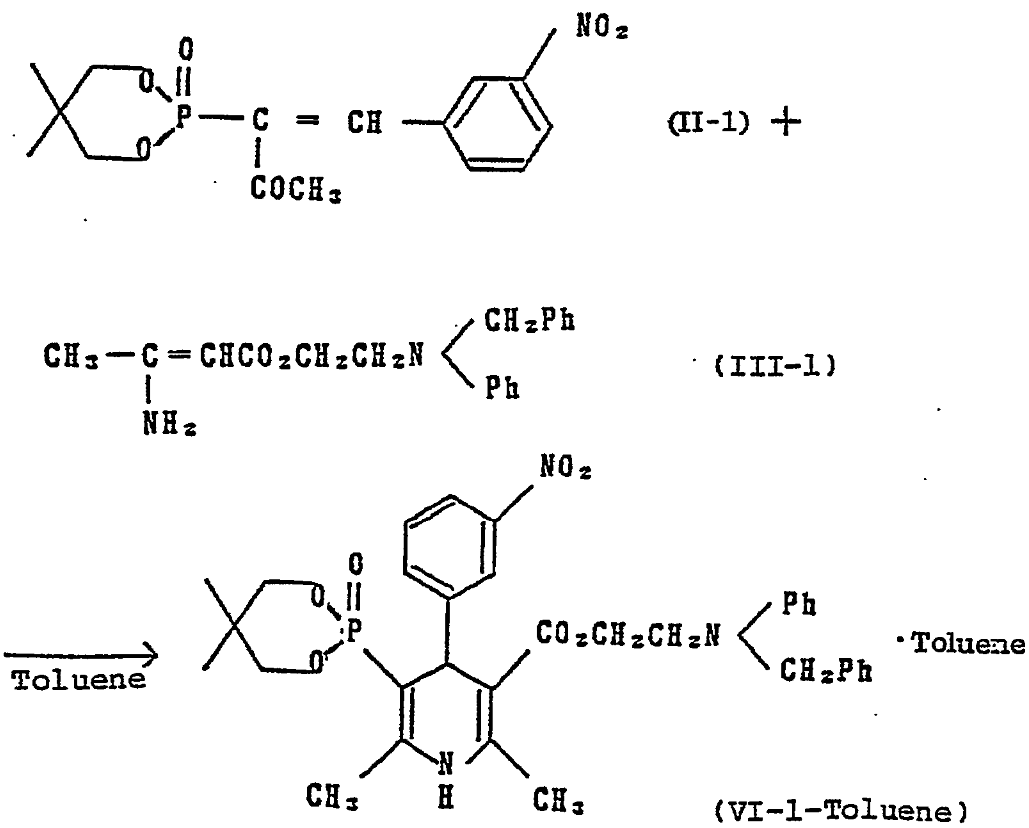


(II-1) +

(III-1)

(VI-1-Toluene)

Further, by way of the solvate of the formula VI–1l-Toluene, it is possible to readily obtain e.g. compounds of the following formulas I–1, IV–1-HCl and V–1–HC1–$C_2H_5OH$ in high purity.

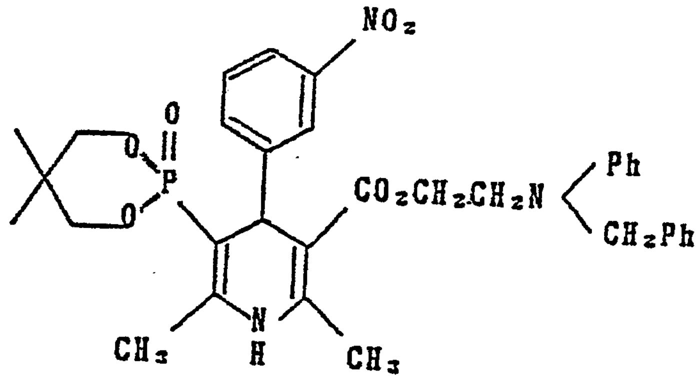

(I-1)

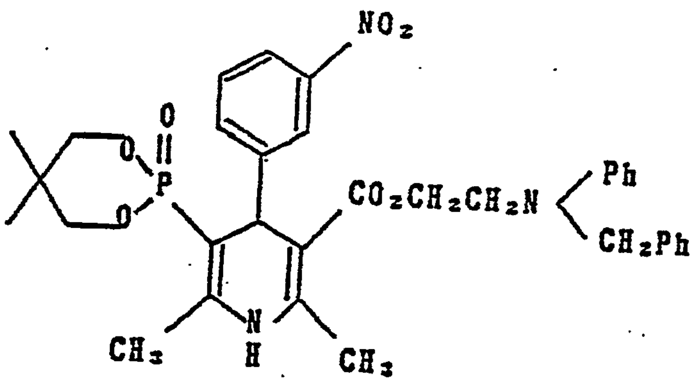

· HCl (IV-1-HCl)

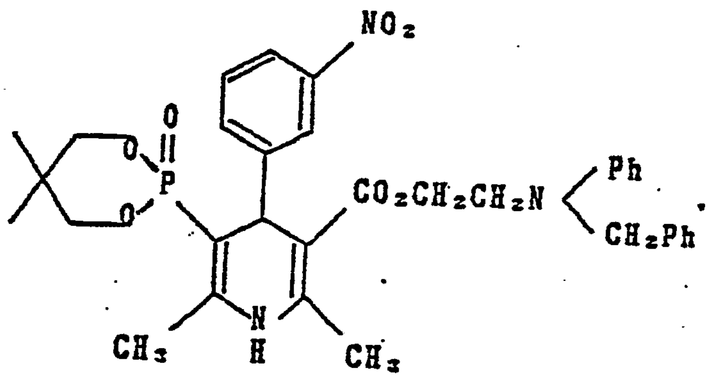

· HCl · $C_2H_5OH$

(V-1-HCl-$C_2H_5OH$)

Namely, it is possible to obtain a compound of the formula I free from a solvent by recrystallizing the solvate of the formula VI from e.g. ethyl acetate or ethanol. For example, the compound of the formula I–1 can be obtained by recrystallizing the toluene solvate of the formula VI–1-Toluene from ethyl acetate or ethanol. (See Example 13.)

The hydrochloride of the formula IV–1–HCl has three types of crystal forms i.e. α-, β- and γ-forms. The difference between these crystal forms is shown by the difference in the manner for obtaining them as disclosed in Examples 15 and 16. It is also shown by the difference in the X-ray diffraction spectra. There is no pharmacological difference found among these three types of crystal forms.

The compound of the formula I may be prepared, also by the following Scheme 3, wherein $R^1$ to $R^6$, $X^1$, $X^2$ and Y have the same meanings as defined above with respect to the formula I and Z is $-O-$ or $-CH_2-$.

Scheme 3

Method (b) wherein the following three starting materials are reacted.

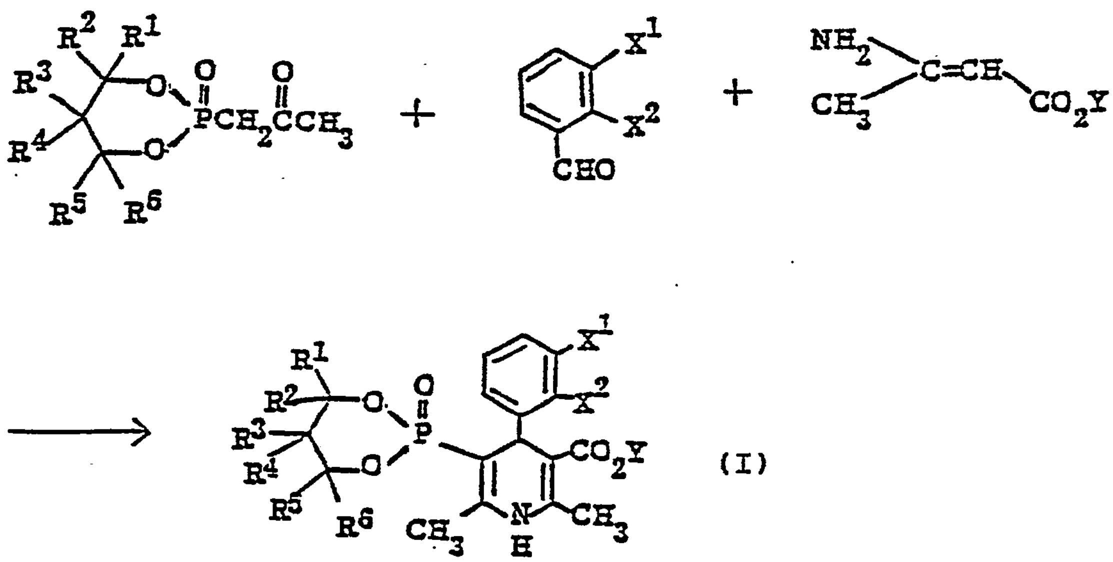

(I)

Method (c) wherein the following two starting materials reacted.

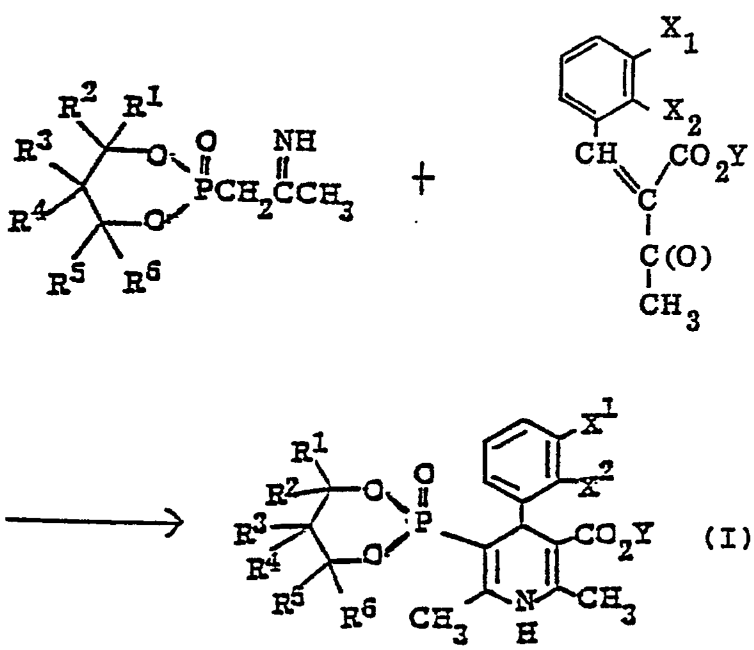

(I)

Method (d) wherein the following three starting materials reacted.

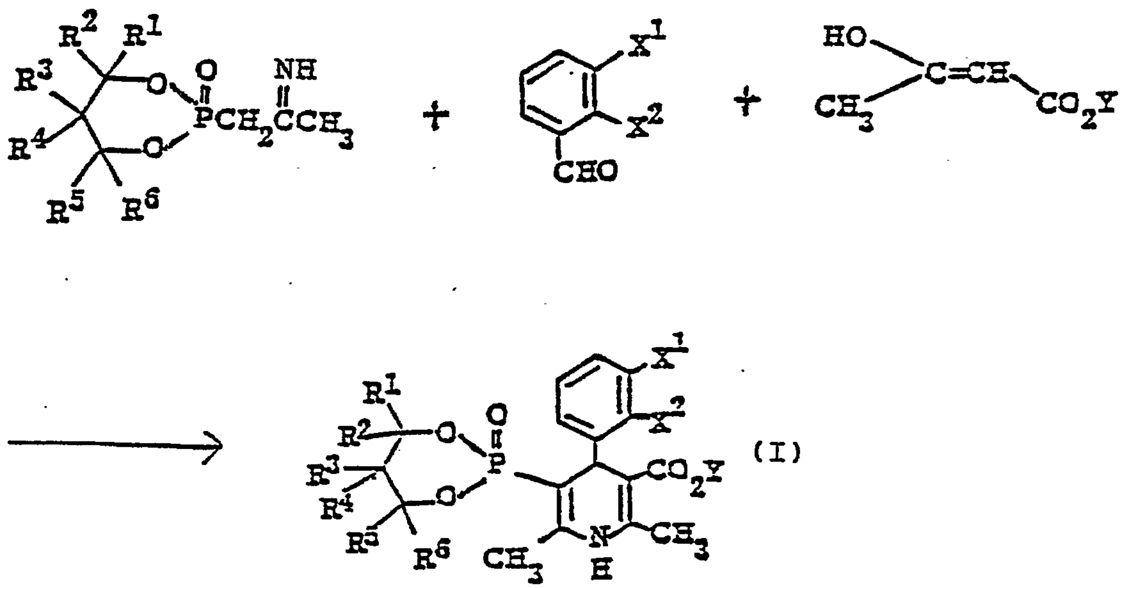

(I)

Method (e) wherein the following four starting materials are reacted in the presence of an α-halogenoalkanoic acid, such as trifluoroacetic acid or monochloroacetic acid.

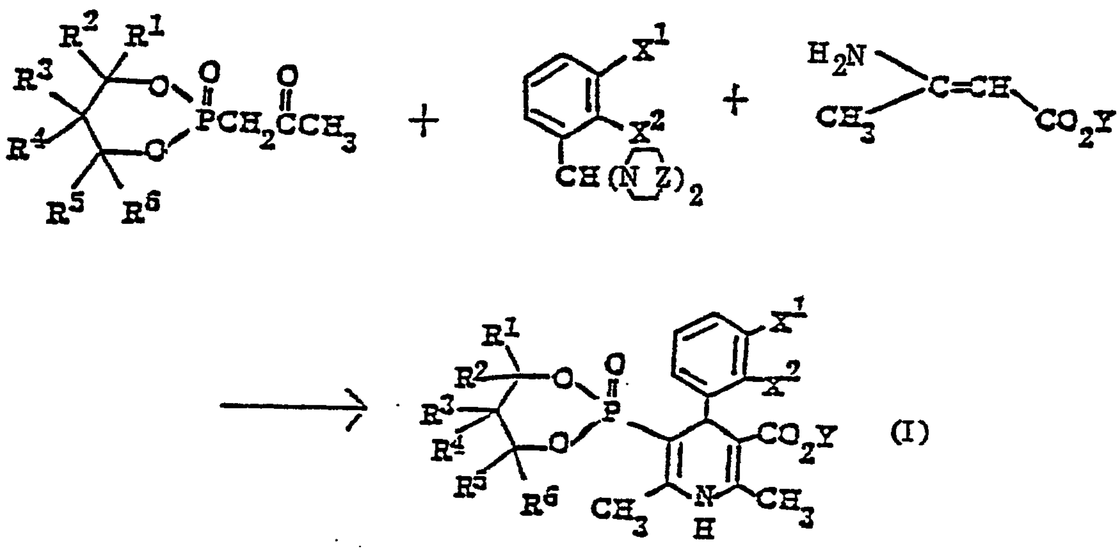

(I)

These reactions may be conducted in inert solvents in accordance with the process for the preparation of the compound of the formula I from compounds of the formulas II and III. Depending upon the solvent for the reaction and the type of the compound of the formula I, a solvate of the formula VI may be formed.

As mentioned above, the compounds of the present invention are not only capable of inhibiting the contraction of smooth muscle and cardiac muscle by the calcium antagonistic effects but also antihypertensively effective when administered orally. Thus, they are useful for the medical treatment of the coronary heart diseases, cerebral diseases or hypertension of mammals.

The oral toxicities of the several compounds of the present invention are unexpectedly low.

The unexpectedly long durations of the antihypertensive action of the several compounds of the present invention have been observed.

Thus, the present invention provides an antihypertensive agent or coronary or cerebral vasodilator composition comprising an effective amount of the compound of the formula I or its pharmaceutically acceptable salt, and a pharmaceutically acceptable diluent or carrier. Such a composition may also be formulated into a veterinary composition by combining the compound of the present invention with a veterinarily acceptable diluent or carrier.

Such compositions, may be used in the form suitable for oral administration, e.g. tablets or capsules, in the form suitable for transdermal administration, e.g. ointments or plasters, in the form suitable for inhalation, e.g. aerosols or solutions suitable for spraying, in the form suitable for injections, e.g. a sterilized aqueous solution, or in the form of a suppository suitable for use in vagina or rectum.

The compositions of the present invention usually contain the compound of the formula I in an amount of from about 0.I to about 99.5% by weight, preferably from about 0.5 to about 95% by weight, based on the total weight of the composition.

The compounds of the present invention or the compositions of the present invention may be used in combination with other pharmaceutically or veterinarily active compounds. Further, the composition of the present invention may contain a plurality of the compounds of the formula I.

The daily dose of the compounds of the formula I may be varied depending upon the type and the condition of the desease to be cured and the type of the patient (the age, sex, sensitivity, etc.). In the case of the intravenous administration, the daily dose is usually from 0.000I to I0 mg, preferably from 0.0005 to I mg, of the active ingredient per I kg of the body weight. Likewise, in the case of the oral or transdermal administration, the daily dose is usually from 0.00I to I00 mg of the active ingredient per I kg of the body weight. Further, the daily dose in the case of the administration in the form of a suppository to e.g. a vagina or rectum, is usually from 0.00I to 200 mg, preferably from 0.005 to I00 mg, of the active ingredient per I kg of the body weight. The content of the active ingredient in an aerosol, is usually from 0.I to I0% by weight, preferably from 0.I to 2% by weight. Such a daily dose may be divided for administration twice or more times per day.

The above-mentioned compositions containing the compounds of the formula I may be prepared by a conventional method, and a conventional excipient may be incorporated therein.

The present invention will be now described in further detail with reference to Working Examples, Test Examples and various formulations. However, it should be understood that the present invention is by no means restricted by these specific Examples.

EXAMPLES

Test I: Pharmacological activities of the compounds of the present invention.

(I) Calcium antagonistic effects

I0 mm in situ length of taenia caecum of guinea pig was suspended at a tension of Ig in a 20 ml organ bath filled with a physiological salt solution (NaCl: I35 mM, KCl: 5 mM etc.).

This solution was bubbled with a gas mixture of 95% $O_2$-5% $CO_2$ and kept at 37°C. Then, the preparation was depolarized by a $K^+$ rich solution (NaCl: 40 mM, KCl: I00 mM). After I0-20 minutes equilibration period, I0 mM of $CaCl_2$ was added to the bathing solution. The contraction was produced, and then the test compound applied cumulatively. The relaxation produced was expressed as percentage of the maximum relaxation produced by $10^{-4}$ M papaverine, and the concentration of the compound producing 50% relaxation, i.e. $ID_{50}$ (M), was calculated. The values of $pID_{50}$ ($pID_{50}$= -log[$ID_{50}$]), are summarized in Table I.

(2) Antihypertensive effects

After oral administration of the test compound dissolved in a $H_2O$-PEG 400 solvent mixture ($H_2O$:PEG 400 (v/v)=I:3) to the male spontaneously hypertensive rat (SHR), the systolic blood pressure was measured at 2, 4, 6 and 8 hours after the administration of the test compounds by a tail cuff method (KN-2I0-I made by Natsume Seisakusho). Prior to the measurement, rats were warmed at 50°C for five minutes. The effectively antihypertensive activities were observed also at 8 hours after the administration of the test compounds. The results are summarized in Table 2.

Test 2: Acute toxicity test

ddY mice (♂, 4 weeks old) were divided into groups of three to five mice and the test compound suspended in 0.5% methylcellulose solution was administered orally to the male ddY mice.

After seven days, $LD_{50}$ values were calculated from the dead rats recorded in the individual dosage groups by the method of Litchfield-Wilcoxon. The results are shown in Table I.

Table 1

| Calcium antagonistic effect and $LD_{50}$ value of the compound of the present invention. Test compound | $pID_{50}$ | $LD_{50}$ (mg/kg) |
|---|---|---|
| Hydrochloride of example 1 | 8.17 | >600 |
| Dihydrochloride of example 2 | 7.01 | >400 |
| Dihydrochloride of example 3 | 6.34 | >400 |
| Hydrochloride of example 4 | 6.90 | >300 |
| Hydrochloride of example 5 | – | >300 |
| Hydrochloride of example 6 | 6.98 | >300 |
| Hydrochloride of example 7 | 8.17 | >600 |
| Hydrochloride of example 8 | 7.21 | – |
| Dihydrochloride of example 9 | 7.19 | – |
| Dihydrochloride of example 10 | 6.76 | – |
| Hydrochloride of example 11 | 6.66 | – |

Table 2

| Test compound | Dose (mg/kg) | Antihypertensive effect: decrease (%) | | | |
|---|---|---|---|---|---|
| | | 2 (hr) | 4 | 6 | 8 |
| Comparative compound 1 | 60 | 22 | 9 | 3 | |
| Comparative compound 2 | 30 | 18 | 7 | 6 | |
| Compound of formula IV-1-HCl (Hydrochloride of Example 1) | 10 | 14 | 32 | 27 | 15 |
| Dihydrochloride of example 2 | 10 | 15 | 29 | 37 | 26 |
| Dihydrochloride of example 3 | 15 | 19 | 33 | 34 | 29 |
| Hydrochloride of example 4 | 20 | 16 | 38 | 37 | 22 |
| Hydrochloride of example 5 | 10 | 32 | 40 | 37 | 10 |
| Hydrochloride of example 6 | 10 | 12 | 18 | 28 | 15 |
| Hydrochloride of example 7 | 15 | 27 | 31 | 34 | 17 |
| Hhydrochloride of example 8 | 5 | 7 | 23 | 23 | 14 |
| Dihydrochloride of example 9 | 10 | 8 | 17 | 29 | 21 |
| Dihydrochloride of example 10 | 15 | 28 | 36 | 33 | 26 |
| Hydrochloride of example 11 | 10 | 15 | 33 | 35 | 30 |
| Dihydrochloride of example 12 | 20 | 15 | 23 | 10 | 1 |

Structure of Comparative compounds (compounds disclosed in Japanese Unexamined Patent Publication No. 69089/1985)

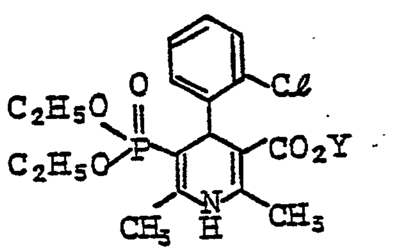

Comparative compound 1:

$Y=-CH_3$

Comparative compound 2:

$Y=-CH_2CH_2N<\begin{matrix}CH_3\\CH_2Ph\end{matrix}$

It is evident from the above that the compounds of the present invention are superior to the specific compounds (Comparative compounds) disclosed in Japanese Unexamined Patent Publication No. 69089/1985 in both the activities and the effective period.

(Tests in more detail)

The compound of the formula IV-I-HCl mentioned in Example I5 (which is also hydrochloride of Example I) has been tested in more detail and it has been found that this compound has pharmaceutically very excellent features as follows.

I. It shows a very slow onset and a long-lasting duration of the hypotensive action.

2. There are no significant changes in the degree of the hypotensive effects by repeated administration for I0 days.

3. It shows high vasculoselectivity against myocardium and almost no effect on contractile force of the heart.

4. It has a low acute toxicity.

5. It shows the diuretic and natriuretic action.

Therefore, the compound (IV-I-HCl) has apparently very excellent features as the antihypertensive agent.

The compound of the formula V-I-HCl-$C_2H_5OH$ has activities similar to those of this compound (IV-I-HCl).

Test 3: Antihpertensive effect

Each of the compound of γ-form in Example I5 (Compound A) and Nicardipine hydrochloride was dissolved in the solvent (PEG 400: $H_2O$ (V/V)=2:I) and then administered to male spontaneously hypertensive rats (SHR) via an oral route (I0 mg/kg body weight). Following "the test I: (2) Antihypertensive effect" except the apparatus for measuring the systolic blood pressure was PS-I00 made by RIKEN KAIHATSU and that dose group size was 8 rats/group, the systolic blood pressure were measured by a tail-cuff method at the time before the administration, 2, 4, 6, 8, I0 and 24 hours after the administration, the antihypertensive effect of Compound A and Nicardipine hydrochloride (positive control) have been shown in Figure I.

Compound A has apparently shown a slow onset and a longer lasting duration of the action than that of Nicardipine hydrochloride as shown in Figure I.

Test 4: Vasculoselectivity

4-I: Effect on vascular smooth muscles.

The onset of vasodilatory effect of compound A on KCl (50 mM)-induced contraction of the strips of rabbit thoractic aorta was much slower than that of Nifedipine or Nicardipine hydrochloride, and further, the recovery from vasodilation of the strips effected by compound A after being washing out with high -$K^+$ solution was also very slow.

While, $CaCl_2$-induced contraction of the strips in high $K^+$ solution was inhibited by the pre-incubation with Compound A, Nifedipine and Nicardipine hydrochloride, the prolongation of a pre-incubation time with Compound A increased the inhibitory activity.

The $pA_2$ value were shown in Table 3.

Table 3

| Compound | pA2 Pre-incubation time with the test compound | | |
|---|---|---|---|
| | 1 hr. | 3 hrs. | 6 hrs. |
| Compound A | 8.63 | 9.17 | 9.33 |
| Nifedipine | 8.60 | – | – |
| Nicardipine hydrochloride | 9.68 | – | 9.70 |

From the results shown in Table 3, it can be said as follows.

Compound A has a strong calcium antagonistic activity on vascular smooth muscle, and it is expected that very slow onset and recovery of vasodilatory effect of Compound A result in a slow onset and a long duration of the antihypertensive action.

4-2: Effects on the myocardium

The atria from male guinea pig were used. The right artium was allowed to be freely, and the left atrium was stimulated electrically. Table 4 shows the percentage of the decrease from initial heart rate (HR) of the right atrium and contractile force (CF) of the left atrium at 3 hours after a application of the test compound.

Table 4

| Compound | Heart rate | | Contractile force | |
|---|---|---|---|---|
| | Dose (M) | Decrease (%) | Dose (M) | Decrease (%) |
| Compound A | $10^{-9}$ | 11.6 | 10–6 | 23.1 |
| | $10^{-8}$ | 60.4 | | |
| Nicardipine hydrochloride | $10^{-9}$ | 11.3 | 10–7 | 43.5 |
| | $10^{-8}$ | 50.0 | $10^{-6}$ | 80.2 |

From these test results, it can be said as follows.

I. The potency of the negative chronotropic effect of Compound A was almost the same as that of Nicardipine hydrochloride. On the other hand, the potency of the negative inotropic effect of Compound A was over I0 times less than Nicardipine hydrochloride.

2. Compound A has high vasculoselectivity and almost no effect of CF of the heart.

Test 5: Acute toxicity

Male ddY strain mice aged 4 weeks [ddY strain mice] and male Sprague-Dawley rats aged 6 weeks [SD strain rats] were used. The test compound suspended in 0.5% methylcellulose solution was administered to mice and rats via an oral route. These animals were examined for 7 days after administration. The results are shown in Table 5.

Table 5

| Test animals | Dose (mg/kg) | Test compounds Compound A Dead animals/ tested animals | Nicardipine hydrochloride Dead animals/tested animals |
|---|---|---|---|
| ddY strain mice | 300 | 0/3 | 0/3 |
| ddY strain mice | 424 | 0/3 | 1/3 |
| ddY strain mice | 600 | 0/3 | 3/3 |
| SD strain rats | 600 | 0/5 | 2/5 |
| SD strain rats | 1200 | 0/5 | 2/5 |
| SD strain rats | 2400 | 0/5 | 5/5 |

As shown in Table 5, Compound A is apparently less toxic than Nicardipine hydrochloride.

Test 6: Diuretic Effect

Male SHR (l0-ll weeks old) fasted for l8 hr. were used. Just after p.o. administration of the test compounds, they received 25 ml/kg of 0.9% NaCl solution orally. Then, each rat was placed in a metabolism cage, and the urine was collected for l0 hr. Urinary electrolytes ($Na^+$) were measured with a flame photometer (FPF-3A made by Hiranuma Seisakusho). The results are shown in Table 6.

Table 6

| Test compound | dose (mg/kg) | Volume of the urine (ml/rat) | Na content in the urine (mEq/rat) |
|---|---|---|---|
| Control | – | 4.7 | 0.73 |
| Compound A | 10 | 7.9 | 1.02 |
| Compound A | 20 | 15.3 | 1.25 |
| Furosemide | 20 | 7.7 | 1.02 |

As shown in Table 6, the diuretic and natriuretic effects of Compound A are stronger than those of Furosemide, a diuretic.

EXAMPLE 1

Synthesis of 2-(N-benzyl-N-phenylamino)ethyl 5-(2,2-dimethylpropylenedioxyphosphinyl)-2,6-dimethyl-l,4-dihydro-4-(3-nitrophenyl)pyridine-3-carboxylate

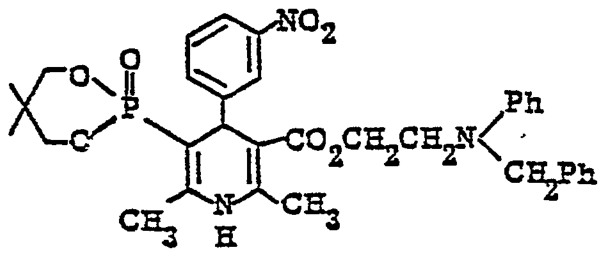

EXAMPLE 1-1

[Method a]

14.7 g of 2,2-dimethylpropylene α-(3-nitrobenzylidene)acetonylphosphonate and l3.4 g of 2-(N-benzyl-N-phenylamino)ethyl 3-aminocrotonate were dissolved in 50 ml of toluene, and the solution was refluxed for 10 hours. Then, the precipitate was collected by filtration and was recrystallized from ethyl acetate, whereby the above-identified compound was obtained as yellow crystal (mp l55-l56°C). In a similar manner, compounds of Example 2 to l2 were obtained. The characteristics and the mass spectral data of the compounds thus obtained are shown in Table 7.

EXAMPLE l-2

[Method b]

2.l g of 2,2-dimethylpropylene acetonylphosphonate, l.5 g of 3-nitrobenzaldehyde and 3.l g of 2-(N-benzyl-N-phenylamino)ethyl 3-aminocrotonate are dissolved in toluene, and the solution is refluxed. Then, the solvent is distilled off under reduced pressure, and the residue is purified by silica gel column chromatography, followed by recrystallization from ethyl acetate, whereby the above-identified compound is obtained.

EXAMPLE l-3

[Method c]

2.l g of 2,2-dimethylpropylene 2-amino-l-propenylphosphonate and 4.4 g of 2-(N-benzyl-N-phenylamino)ethyl α-(3-nitrobenzylidene)acetoacetate are dissolved in toluene, and the solution is refluxed. Then, the solvent is distilled off under reduced pressure, and the residue is purified by silica gel column chromatography, followed by recrystallization from ethyl acetate, whereby the above-identified compound is obtained.

EXAMPLE 1–4

[Method d]

2.l g of 2,2-dimethylpropylene 2-amino-l-propenylphosphonate, l.5 g of 3-nitrobenzaldehyde and 3.l g of 2-(N-benzyl-N-phenylamino)ethyl acetoacetate are dissolved in toluene, and the solution is refluxed. Then, the solvent is distilled off under reduced pressure, and the residue is purified by silica gel column chromatography, followed by recrystallization from ethyl acetate, whereby the above-identified compound is obtained.

EXAMPLE l-5

[Method e]

2.l g of 2,2-dimethylpropylene actonylphosphonate, 3.l g of 4,4′-((3-nitrophenyl)methylene)bis-morpholine and 3.l g of 2-(N-benzyl-N-phenylamino)ethyl 3-aminocrotonate is dissolved in toluene, and 2.3 g of trifluroacetic acid is added to the solution with dropwise for l0 minutes, following the solution was refluxed for 2 hours. Then, the solution is washed by water and dried with $Na_2SO_4$. Then, the solvent is distilled off under reduced pressure, and the residue is purified by silica gel column chromatography, followed by recrystallization from ethyl acetate, whereby the above-identified compound is obtained.

Table 7

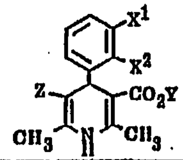

| Example No. | $X^1$ | $X^2$ | Y | Z | Yield (%) | Characteristics (mp, °C) | MS, m/e (Intensity ratio) |
|---|---|---|---|---|---|---|---|
| 1 | $NO_2$ | H | 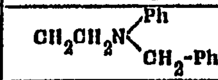 | 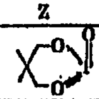 | 45 | Yellow solid (155-156) | 196(61), 209(100), 631(7, $M^+$) |
| 2 | Cl | Cl | 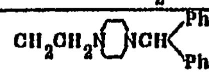 | 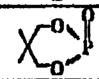 | 60 | Yellow solid (206-207) | 44(100), 167(32), 408(5) |
| 3 | Cl | Cl | 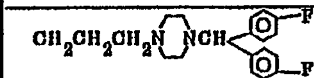 | 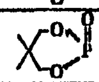 | 55 | Yellow amorphous | 126(81), 203(100), 301(39), 773(20, $M^+$) |
| 4 | $NO_2$ | H | 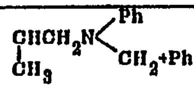 | 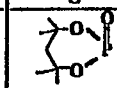 | 40 | Yellow oily substance | 196(100), 495(5), 656(3), 673(2, $M^+$) |
| 5 | $NO_2$ | H | 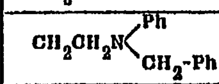 | 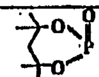 | 69 | Yellow oily substance | 81(100), 196(93), 481(16) |
| 6 | Cl | Cl | 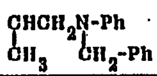 | 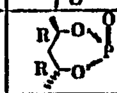 | 46 | Yellow oily substance | 91(67), 223(100), 669(2, $M^+$) |
| 7 | $NO_2$ | H | 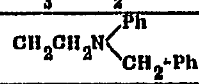 | 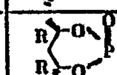 | 81 | Yellow oily substance | 186(50), 209(100), 631(11, $M^+$) |
| 8 | Cl | Cl | 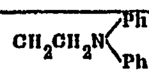 | 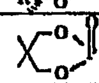 | 68 | Pale yellow solid (131) | 182(29), 195(100), 640(5, $M^+$) |
| 9 | Cl | Cl | 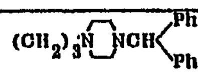 | 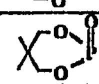 | 74 | Pale yellow solid (159) | 125(100), 167(29), 428(39), 737(18, $M^+$) |
| 10 | Cl | Cl | 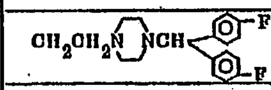 | 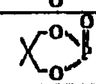 | 67 | Pale yellow solid (141) | 203(100), 300(44), 759(12, $M^+$) |
| 11 | Cl | Cl | 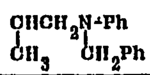 | 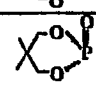 | 84 | Yellow oily substance | 223(100), 408(5), 668(2, $M^+$) |
| 12 | H | $OCHF_2$ | 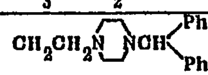 | 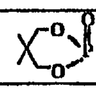 | 75 | Colorless solid (214) | 167(100), 278(63), 426(54), 721(46, $M^+$) |

EXAMPLE 13

13 g of 2,2-dimethylpropylene α-(3-nitrobenzylidene)-acetonylphosphonate and 11.9 g of 2-(N-benzyl-N-phenylamino)ethyl 3-aminocrotonate were dissolved in 100 g of toluene, and the solution was refluxed for 2 hours while removing formed water by azeotropic dehydration. The reaction solution was cooled to room temperature, whereby a solvate of 2-(N-benzyl-N-phenylamino)ethyl 5-(2,2-dimethyl propylenedioxyphosphinyl)-1,4-dihydro-2,6-dimethyl-4-(3-nitrophenyl)pyridine-3-carboxylate (I-1) with one molecule of toluene (VI-1-Toluene) was obtained as crystals.

Yellow crystals, amount: 23.6 g (yield: 85%)

The compound of the formula I-1 was found to form a solvate also with benzene.

When these solvates were recrystallized from ethyl acetate or ethanol, the compounds free from solvent (toluene or benzene) were obtained. The melting point and the NMR spectrum of the compound free from solvent are as follows.

mp: 156-158°C

NMR (CDCl3):

δ: 0.66(3H, s), 0.99(3H, s), 2.25(3H, s), 2.3(3H, d, J=2.5Hz), 3.5-3.7(4H, m), 4.1-4.4(4H, m), 4.51(2H, s), 4.9(1H, d, J=10.9Hz), 6.47(1H, d, J=4.2Hz), 6.67(3H, m), 7.1-7.35(8H, m), 7.58(1H, d, J=6.6Hz), 7.96(1H, m), 8.07(1H, t, J=1.9Hz)

EXAMPLE 14

193.1 g of the toluene solvate (VI-1-Toluene) obtained by the method following the Example 13 was dissolved under heating in 996 g of ethanol, and 51 g of a 21% hydrogen chloride-ethanol solution was added thereto. The mixture was cooled to room temperature, whereby 185.2 g (yield: 97.2%) of a solvate of the hydrochloride with 1 mol of ethanol (V-1-HCl-$C_2H_5OH$) was obtained.

Yellow crystals, mp: 149-155°C (decomposed)

EXAMPLE 15

135 g of the toluene solvate (VI-1-Toluene) obtained in Example 13 was dissolved under heating in 783 g of acetone, and 21.4 g of 35% hydrochloric acid was slowly dropwise added thereto. After the completion of the dropwise addition, the reaction solution was cooled to room temperature, whereby 121.6 g (yield: 97.6%) of the hydrochloride (γ-form of IV-1-HCl) was obtained.

Greenish yellow needle-like crystals (γ-form) mp: 149-156°C (decomposed)

The compound of the formula IV-1-HCl was dissolved in ethanol/chloroform = 1/9 (v/v), and the solvent was distilled off. The residue was dissolved in acetone and left to stand still at room temperature, whereby the hydrochloride of the formula IV-1-HCl having a different crystal form (α-form) was obtained. The α-form was capable of being converted to a different crystal form (β-form) by heating (at 70°C).

EXAMPLE 16

7.24 g of the toluene solvate (VI-1-Toluene) obtained in Example 13 was dissolved under heating in 30 g of acetonitrile, and 2 g of 35% hydrochloric acid was added thereto. The mixture was cooled to room temperature and left to stand for 5 hours, whereby 4.52 g (yield: 63.8%) of a solvate of the hydrochloride of the compound of the formula IV-1-HCl with 1 mol of acetonitrile (V-1-HCl-$CH_3CN$) was obtained.

Yellow crystals, mp: 149-156°C (decomposed)

When this compound was heated at 70°C, acetonitrile was removed to obtain crystals of β-form.

Now, examples will be given for various formulations containing the compound of the formula I. In the following Formulation Examples, Compound A is as mentioned above, γ-form of hydrochloride in Example 15.

Tablets

| Composition (1,000 tablets) | |
|---|---|
| Compound A or hydrochloride of the compound of the example 2 | 20.0 (g) |
| Lactose | 70.0 |
| Corn starch | 25.0 |
| Crystal cellulose powder | 25.0 |
| Polyvinyl pyrrolidone | 8.0 |
| Magnesium stearate | 2.0 |
| | 150.0 |

Each amount of the above ingredient was introduced into a twin shell blender and uniformly mixed. This mixture was tableted by a direct compression method to obtain tablets having a weight of l50 mg per tablet.

Capsules

| Composition (1,000 capsules) | |
|---|---|
| Compound A or hydrochloride of the compound of the example 2 | 20 (g) |
| Corn starch | 65 |
| Crystal cellulose powder | 60 |
| Magnesium stearate | 5 |
| | 150 |

Each amount of the above ingredient was introduced into a twin shell blender and uniformly mixed. Each l50 mg of the mixture was packed in a hard gelatin capsule.

Powder

| Composition | |
|---|---|
| Compound A or hydrochloride of the compound of the example 2 | 1.0 (g) |
| Lactose | 88.0 |
| Crystal cellulose powder | 10.0 |
| Methyl cellulose | 1.0 |
| | 100.0 |

Each amount of the above ingredient was introduced into a twin shell blender and uniformly mixed to obtain a powder.

Syrup

| Composition (2% syrup) | |
|---|---|
| Compound A or hydrochloride of the compound of the example 2 | 2.0 (g) |
| Sugar | 30.0 |
| Glycerin | 5.0 |
| Flavoring agent | 0.1 |
| 96% ethanol | 10.0 |
| Methyl p-hydroxybenzoate | 0.03 |
| Purified water | to make 100.0 g |

The sugar and the hydrochloride of the compound of Example l were dissolved in 50 g of warm water, and after cooling the solution, a solution of the flavoring agent in glycerin and ethanol was added. Then, water was added to this mixture to bring the total amount to l00.0 g.

**Claims for the Contracting States BE, CH, DE, FR, GB, GR, IT, LI, LU, NL, SE**

I. A compound of the formula:

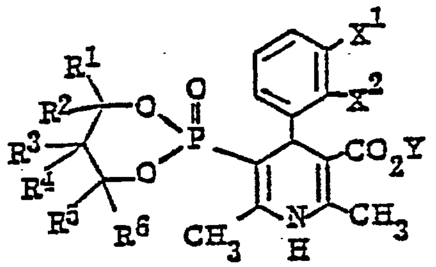

(I)

wherein each of $R^1$, $R^2$, $R^3$, $R^4$, $R^5$ and $R^6$ which may be the same or different, is hydrogen or $C_1$–$C_4$ alkyl; one of $X^1$ and $X^2$ is nitro, fluorine, chlorine, difluoromethoxy or trifluoromethyl and the other is hydrogen, or both of $X^1$ and $X^2$ are chlorine; and Y is

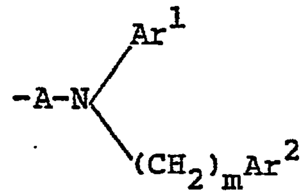

wherein A is $C_2$–$C_6$ alkylene, each of $Ar^1$ and $Ar^2$ which may be the same or different, is phenyl which may be substituted by chlorine, fluorine or $C_1$–$C_3$ alkoxy, and m is an integer of from 0 to 4, or Y is

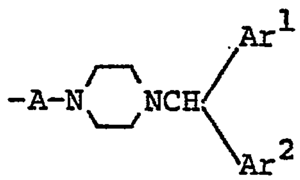

wherein A, $Ar^1$ and $Ar^2$ are as defined above when $X^1$ is hydrogen and $X^2$ is difluoromethoxy or when both $X^1$ and $X^2$ are chlorine; or a pharmaceutically acceptable salt thereof, or a solvate of the compound or the salt.

2. The compound of Claim 1, wherein one of $X^1$ and $X^2$ is nitro or chlorine and the other is hydrogen, or both of $X^1$ and $X^2$ are chlorine.

3. The compound of Claim 2, wherein each of $R^1$, $R^2$, $R^3$, $R^4$, $R^5$ and $R^6$ which may be the same or different, is hydrogen or methyl.

4. The compound of Claim 3, wherein A is $-CH_2CH_2-$, $-(CH_2)_3-$ or $-CH(CH_3)CH_2-$, and m is one.

5. The compound of Claim 4, wherein each of $Ar^1$ and $Ar^2$ which may be the same or different, is phenyl or p-fluorophenyl.

6. The compound of Claim 5, wherein $-C(R^1)(R^2)C(R^3)(R^4)C(R^5)(R^6)-$ is $-CH_2C(CH_3)_2CH_2-$, $-C(CH_3)_2CH_2C(CH_3)_2-$ or $-CH(CH_3)CH_2CH(CH_3)-$.

7. The compound of Claim I, wherein $X^1$ is nitro, $X^2$ is hydrogen, or both of $X^1$ and $X^2$ are chlorine;
$-C(R^1)(R^2)C(R^3)(R^4)C(R^5)(R^6)-$ is $-CH_2C(CH_3)_2CH_2-$, $-C(CH_3)_2CH_2C(CH_3)_2-$ or $-CH(CH_3)CH_2CH(CH_3)-$;
A is $-CH(CH_3)CH_2-$ or $-CH_2CH_2-$;

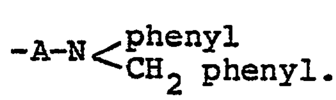

8. The compound of Claim 7, wherein $X^1$ is nitro, $X^2$ is hydrogen.

9. The compound of Claim I, wherein $X^1$ is hydrogen, $X^2$ is difluoromethoxy or both $X^1$ and $X^2$ are chlorine;
$-C(R^1)(R^2)C(R^3)(R^4)C(R^5)(R^6)-$ is $-C(CH_3)_2CH_2C(CH_3)_2-$, $-CH(CH_3)CH_2CH(CH_3)-$ or $-CH_2C(CH_3)_2CH_2-$;

A is $-CH(CH_3)CH_2-$, $-CH_2CH_2-$ or $CH_2CH_2CH_2-$;
$Ar^1$ and $Ar^2$, which may be the same or different, is phenyl or p-fluorophenyl; and Y is

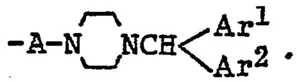

10. The compound of claim 1, wherein both $X^1$ and $X^2$ are chlorine:
$-C(R^1)(R^2)C(R^3)(R^4)C(R^5)(R^6)-$ is $-CH_2C(CH_3)_2CH_2-$;
A is $-CH_2CH_2-$ or $-CH_2CH_2CH_2-$;
$Ar^1$ and $Ar^2$ is phenyl or p-fluorophenyl; and
Y is

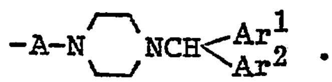

11. The compound of claim 1, having the formula:

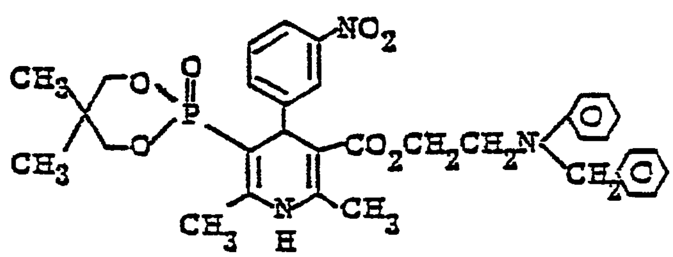

or a pharmaceutically acceptable salt thereof.

12. The compound of claim 1, having the formula:

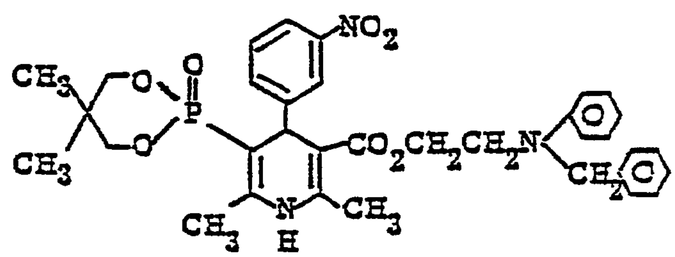

wherein solvent is benzene or toluene.

13. Solvate of a pharmaceutically acceptable salt of the compound of claim 1, having the formula:

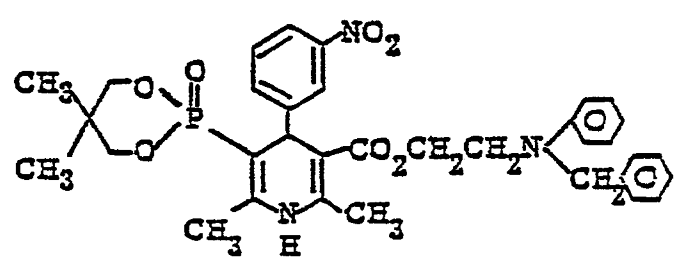

wherein solvent is ethanol or acetonitrile.

14. The compound of claim 1, which is 2-(4-diphenylmethyl-1-piperazinyl)ethyl 5-(2,2-dimethylpropylenedioxyphosphinyl)-2,6-dimethyl-1,4-dihydro-4-(2,3-dichlorophenyl)-pyridine-3-carboxylate, 3-(4-bis-(4-fluorophenyl)-methyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate, 1-methyl-2-(N-benzyl-N-phenylamino)ethyl 5-(1,1,3,3-tetramethylpropylenedioxyphosphinyl)-2,6-dimethyl-1,4-dihydro-4-(3-nitrophenyl)-pyridine-3-carboxylate, 2-(N-benzyl-N-phenylamino)ethyl 5-(1,1,3,3-tetramethylpropylenedioxyphosphinyl)-2,6-dimethyl-1,4-dihydro-4-(3-nitrophenyl)-pyridine-3-carboxylate,

1-methyl-2-(N-benzyl-N-phenylamino)ethyl 5-(1(R), 3(R)-dimethylpropylenedioxyphosphinyl)-2,6-dimethyl-1,4-dihydro-4-(2,3-dichlorophenyl)-pyridine-3-carboxylate,
2-(N-benzyl-N-phenylamino)ethyl 5-(1(R), 3(R)-dimethylpropylenedioxyphosphinyl)-2,6-dimethyl-1,4-dihydro-4-(3-nitrophenyl)-pyridine-3-carboxylate,
2-(N,N-diphenylamino)ethyl 5-(2,2-dimethylpropylenedioxyphosphinyl)-2,6-dimethyl-1,4-dihydro-4-(2,3-dichlorophenyl)-pyridine-3-carboxylate,
3-(4-diphenylmethyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate,
2-(4-bis(4-fluorophenyl)methyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate,
1-methyl-2-(N-benzyl-N-phenylamino)ethyl 5-(2,2-dimethylpropylenedioxyphosphinyl)-2,6-dimethyl-1,4-dihydro-4-(2,3-dichlorophenyl)-pyridine-3-carboxylate or
2-(4-diphenylmethyl-1-piperazinyl)ethyl 5-(2,2-dimethylpropylenedioxyphosphinyl)-2,6-dimethyl-1,4-dihydro-4-(2-difluoromethoxyphenyl)-pyridine-3-carboxylate, or a pharmaceutically acceptable salt thereof, or a solvate of the compound or the salt.

15. A process for producing a compound represented by the formula:

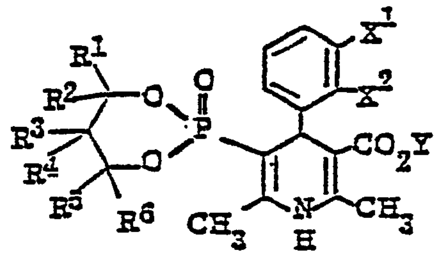

(I)

wherein each of $R^1$, $R^2$, $R^3$, $R^4$, $R^5$ and $R^6$ which may be the same or different, is hydrogen or $C_1$–$C_4$ alkyl; one of $X^1$ and $X^2$ is nitro, fluorine, chlorine, difluoromethoxy or trifluoromethyl and the other is hydrogen, or both of $X^1$ and $X^2$ are chlorine; and Y is

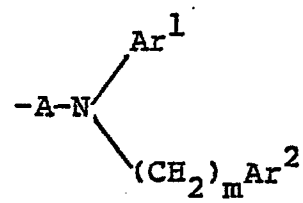

wherein A is $C_2$–$C_6$ alkylene, each of $Ar^1$ and $Ar^2$ which may be the same or different, is phenyl which may be substituted by chlorine, fluorine or $C_1$–$C_3$ alkoxy, and m is an integer of from 0 to 4, or Y is

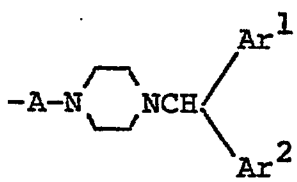

wherein A, $Ar^1$ and $Ar^2$ are as defined above when $X^1$ is hydrogen and $X^2$ is difluoromethoxy or when both $X^1$ and $X^2$ are chlorine; or a pharmaceutically acceptable salt thereof; or a solvate of the compound or the salt, which comprises reacting a compound represented by the formula:

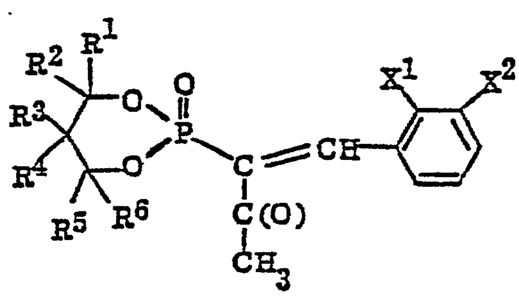

(II)

wherein $R^1$, $R^2$, $R^3$, $R^4$, $R^5$, $R^6$, $X^1$ and $X^2$ are as defined above, with a compound represented by the formula:

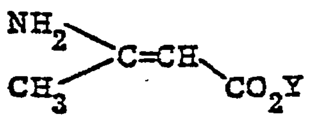

(III)

wherein Y is as defined above, optionally converting the resulting compound of the formula I to its pharmaceutically acceptable salt and optionally converting the compound of the formula I or the salt to a solvate.

16. An antihypertensive, coronary or cerebral vasodilator composition comprising
(a) an antihypertensive, coronary or cerebral vasodilator effective amount of the compound of claim 1; and
(b) a pharmaceutically acceptable diluent or carrier.

17. Use of a compound of claim 1 for preparing a pharmaceutical composition for treating hypertension in a subject in need of such treatment.

18. Use of a compound of claim 1 for preparing a pharmaceutical composition for producing coronary vasodilation in a patient in need of such treatment.

19. Use of a compound of claim 1 for preparing a pharmaceutical composition for producing cerebral vasodilation in a patient in need of such treatment.

20. A process for producing a compound of the formula I as defined in claim 1, or a pharmaceutically acceptable salt thereof, or a solvate of the compound or the salt, which comprises reacting the following three starting materials

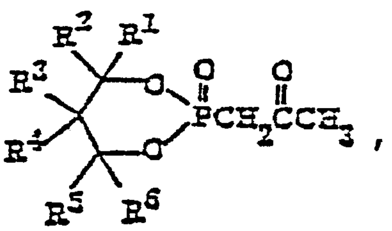 , 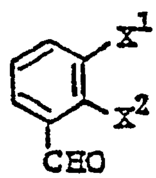 et 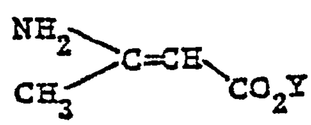

wherein $R^1$, $R^2$, $R^3$, $R^4$, $R^5$, $R^6$, $X^1$, $X^2$ and Y are as defined in claim 1, optionally converting the resulting compound of the formula I to its pharmaceutically acceptable salt, and optionally converting the compound of the formula I or the salt to a solvate.

21. A process for producing a compound of the formula I as defined in claim 1, or a pharmaceutically acceptable salt thereof, or a solvate of the compound or the salt, which comprises reacting the following two starting materials

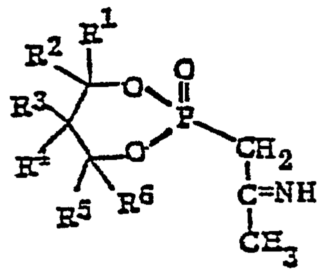 et 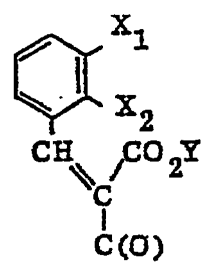

wherein $R^1$, $R^2$, $R^3$, $R^4$, $R^5$, $R^6$, $X^1$, $X^2$ und Y are as defined in claim 1, optionally converting the resulting compound of the formula I to its pharmaceutically acceptable salt, and optionally converting the compound of the formula I or the salt to a solvate.

22. A process for producing a compound of the formula I as defined in claim 1, or a pharmaceutically acceptable salt thereof, or a solvate of the compound or the salt, which comprises reacting the following three starting materials

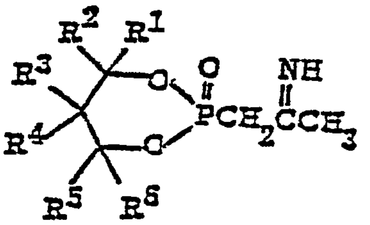,

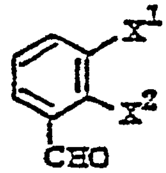 and 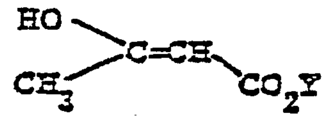

wherein $R^1$, $R^2$, $R^3$, $R^4$, $R^5$, $R^6$, $X^1$, $X^2$ und Y are as defined in claim 1, optionally converting the resulting compound of the formula I to its pharmaceutically acceptable salt, and optionally converting the compound of the formula I or the salt to a solvate.

23. A process for producing a compound of the formula I as defined in claim 1, or a pharmaceutically acceptable salt thereof, or a solvate of the compound or the salt, which comprises reacting the following three starting materials in the presence of an α-halogenoalkanoic acid

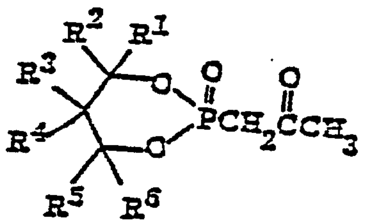,

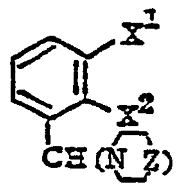 and 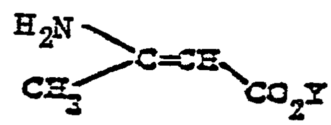

wherein $R^1$, $R^2$, $R^3$, $R^4$, $R^5$, $R^6$, $X^1$, $X^2$ und Y are as defined in claim 1 and Z is –O– or $-CH_2-$, optionally converting the resulting compound of the formula I to its pharmaceutically acceptable salt, and optionally converting the compound of the formula I or the salt to a solvate.

**Claims for the Contracting States AT and ES**

1. A process for producing a compound represented by the formula:

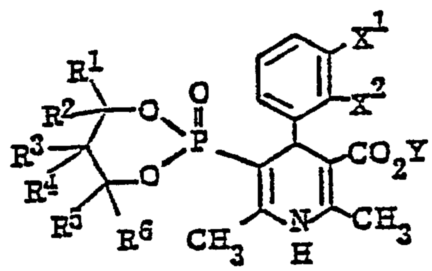 (I)

wherein each of $R^1$, $R^2$, $R^3$, $R^4$, $R^5$ and $R^6$ which may be the same or different, is hydrogen or $C_1$–$C_4$ alkyl; one of $X^1$ and $X^2$ is nitro, fluorine, chlorine, difluoromethoxy or trifluoromethyl and the other is hydrogen, or both of $X^1$ and $X^2$ are chlorine; and Y is

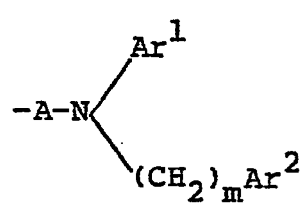

wherein A is $C_2$–$C_6$ alkylene, each of $Ar^1$ and $Ar^2$ which may be the same or different, is phenyl which may be substituted by chlorine, fluorine or $C_1$–$C_3$ alkoxy, and m is an integer of from 0 to 4, or Y is

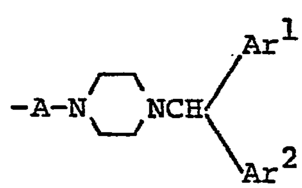

wherein A, $Ar^1$ and $Ar^2$ are as defined above when $X^1$ is hydrogen and $X^2$ is difluoromethoxy or when both $X^1$ and $X^2$ are chlorine; or a pharmaceutically acceptable salt thereof; or a solvate of the compound or the salt, which comprises reacting a compound represented by the formula:

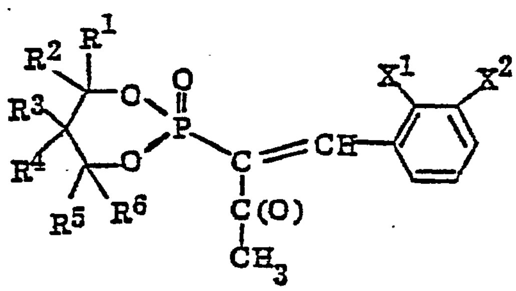

(II)

wherein $R^1$, $R^2$, $R^3$, $R^4$, $R^5$, $R^6$, $X^1$ and $X^2$ are as defined above, with a compound represented by the formula:

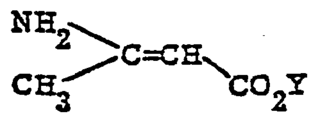

(III)

wherein Y is as defined above, optionally converting the resulting compound of the formula I to its pharmaceutically acceptable salt and optionally converting the compound of the formula I or the salt to a solvate.

2. A process for producing a compound of the formula I as defined in claim 1, or a pharmaceutically acceptable salt thereof, or a solvate of the compound or the salt, which comprises reacting the following three starting materials

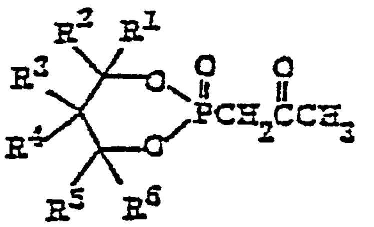 , 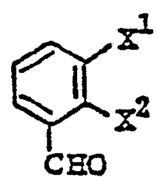 et 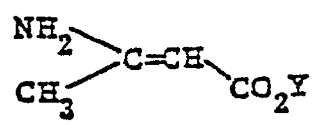

wherein $R^1$, $R^2$, $R^3$, $R^4$, $R^5$, $R^6$, $X^1$, $X^2$ and Y are as defined in claim 1, optionally converting the resulting compound of the formula I to its pharmaceutically acceptable salt, and optionally converting the compound of the formula I or the salt to a solvate.

3. A process for producing a compound of the formula I as defined in claim 1, or a pharmaceutically acceptable salt thereof, or a solvate of the compound or the salt, which comprises reacting the following two starting materials

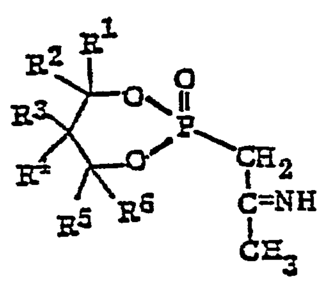 et 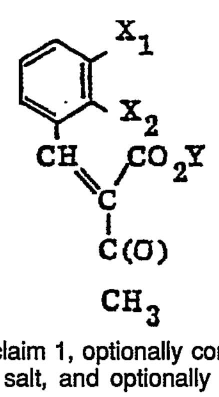

wherein $R^1$, $R^2$, $R^3$, $R^4$, $R^5$, $R^6$, $X^1$, $X^2$ und Y are as defined in claim 1, optionally converting the resulting compound of the formula I to its pharmaceutically acceptable salt, and optionally converting the compound of the formula I or the salt to a solvate.

4. A process for producing a compound of the formula I as defined in claim 1, or a pharmaceutically acceptable salt thereof, or a solvate of the compound or the salt, which comprises reacting the following three starting materials

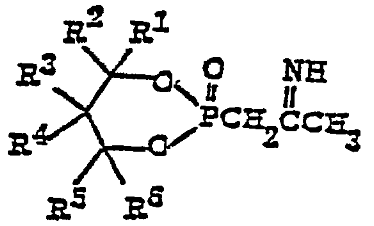 , 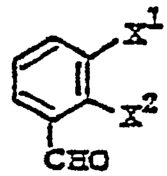 and 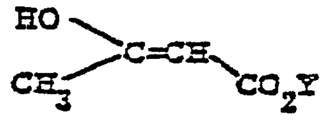

wherein $R^1$, $R^2$, $R^3$, $R^4$, $R^5$, $R^6$, $X^1$, $X^2$ und Y are as defined in claim 1, optionally converting the resulting compound of the formula I to its pharmaceutically acceptable salt, and optionally converting the compound of the formula I or the salt to a solvate.

5. A process for producing a compound of the formula I as defined in claim 1, or a pharmaceutically acceptable salt thereof, or a solvate of the compound or the salt, which comprises reacting the following three starting materials in the presence of an α-halogenoalkanoic acid

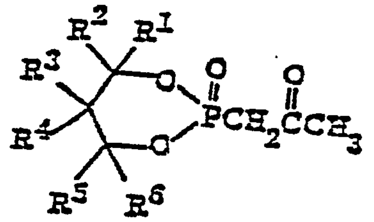 , 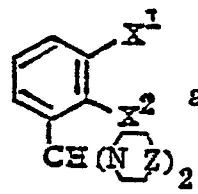 and 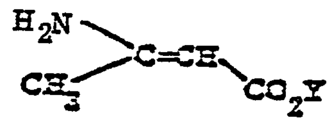

wherein $R^1$, $R^2$, $R^3$, $R^4$, $R^5$, $R^6$, $X^1$, $X^2$ und Y are as defined in claim 1 and Z is –O– or $-CH_2-$, optionally converting the resulting compound of the formula I to its pharmaceutically acceptable salt, and optionally converting the compound of the formula I or the salt to a solvate.

6. The process of claim 1, wherein one of $X^1$ and $X^2$ is nitro or chlorine and the other is hydrogen, or both of $X^1$ and $X^2$ are chlorine.

7. The process of claim 6, wherein each of $R^1$, $R^2$, $R^3$, $R^4$, $R^5$ and $R^6$ which may be the same or different, is hydrogen or methyl.

8. The process of claim 7, wherein A is $-CH_2CH_2-$, $-(CH_2)_3-$ or $-CH(CH_3)CH_2-$, and m is one.

9. The process of claim 8, wherein each of $Ar^1$ and $Ar^2$ which may be the same or different, is phenyl or p-fluorophenyl.

10. The process of claim 9, wherein
$-C(R^1)(R^2)C(R^3)(R^4)C(R^5)(R^6)-$ is $-CH_2C(CH_3)_2CH_2-$,
$-C(CH_3)_2CH_2C(CH_3)_2-$ or $-CH(CH_3)CH_2CH(CH_3)-$.

11. The process of claim 1, wherein $X^1$ is nitro, $X^2$ is hydrogen, or both of $X^1$ and $X^2$ are chlorine;
$-C(R^1)(R^2)C(R^3)(R^4)C(R^5)(R^6)-$ is
$-CH_2C(CH_3)_2CH_2-$, $-C(CH_3)_2CH_2C(CH_3)_2-$ or
$-CH(CH_3)CH_2CH(CH_3)-$;
A is $-CH(CH_3)CH_2-$ or $-CH_2CH_2-$; and
Y= is

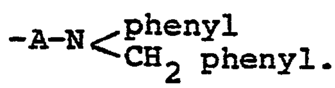

12. The process of claim 11, wherein $X^1$ is nitro, $X^2$ is hydrogen.

13. The process of claim 1, wherein $X^1$ is hydrogen, $X^2$ is difluoromethoxy or both $X^1$ and $X^2$ are chlorine;
$-C(R^1)(R^2)C(R^3)(R^4)C(R^5)(R^6)-$ is $-C(CH_3)_2CH_2C(CH_3)_2-$,
$-CH(CH_3)CH_2CH(CH_3)-$ or $-CH_2C(CH_3)_2CH_2-$;
A is $-CH(CH_3)CH_2-$, $-CH_2CH_2-$ or $CH_2CH_2CH_2-$;
$Ar^1$ and $Ar^2$, which may be the same or different, is phenyl or p-fluorophenyl; and Y is

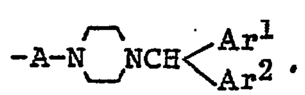

14. The process of claim 1, wherein both $X^1$ and $X^2$ are chlorine:
$-C(R^1)(R^2)C(R^3)(R^4)C(R^5)(R^6)-$ is $-CH_2C(CH_3)_2CH_2-$;

A is $-CH_2CH_2-$ or $-CH_2CH_2CH_2-$;
$Ar^1$ and $Ar^2$ is phenyl or p-fluorophenyl; and
Y is

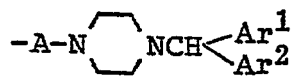 .

15. The process of claim 1, which produces a compound having the formula

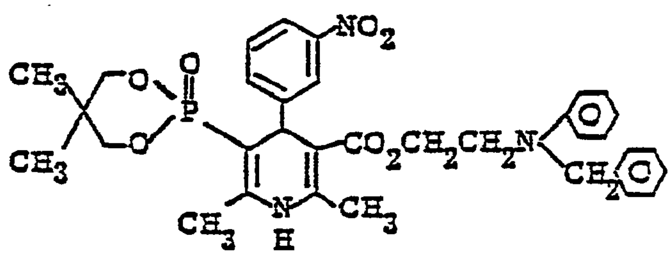

or a pharmaceutically acceptable salt thereof.

16. The process of claim 1 which produces a compound having the formula

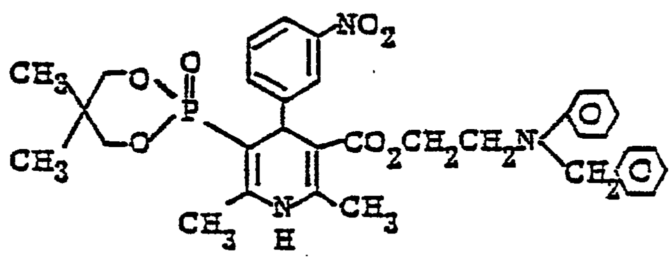 · solvent

wherein solvent is benzene or toluene.

17. The process of claim 1 which produces a solvate of pharmaceutically acceptable salt of a compound of claim 1 having the formula

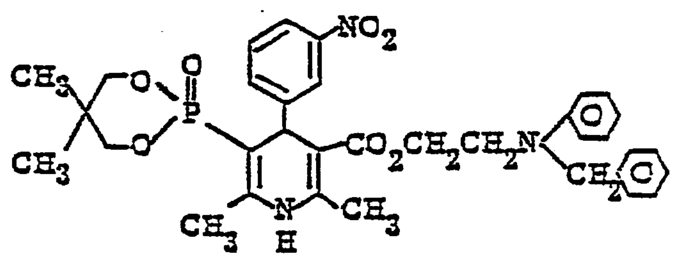 · acid · solvent

wherein solvent is ethanol or acetonitrile.

18. The process of claim 1, which produces 2-(4-diphenylmethyl-1-piperazinyl)ethyl 5-(2,2-dimethylpropylenedioxyphosphinyl)-2,6-dimethyl-1,4-dihydro-4-(2,3-dichlorophenyl)-pyridine-3-carboxylate, 3-(4-bis(4-fluorophenyl)-methyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate, 1-methyl-2-(N-benzyl-N-phenylamino)ethyl 5-(1,1,3,3-tetramethylpropylenedioxyphosphinyl)-2,6-dimethyl-1,4-dihydro-4-(3-nitrophenyl)-pyridine-3-carboxylate, 2-(N-benzyl-N-phenylamino)ethyl 5-(1,1,3,3-tetramethylpropylenedioxyphosphinyl)-2,6-dimethyl-1,4-dihydro-4-(3-nitrophenyl)-pyridine-3-carboxylate,
1-methyl-2-(N-benzyl-N-phenylamino)ethyl 5-(1(R), 3(R)-dimethylpropylenedioxyphosphinyl)-2,6-dimethyl-1,4-dihydro-4-(2,3-dichlorophenyl)-pyridine-3-carboxylate,
2-(N-benzyl-N-phenylamino)ethyl 5-(1(R), 3(R)-dimethylpropylenedioxyphosphinyl)-2,6-dimethyl-1,4-dihydro-4(3-nitrophenyl)-pyridine-3-carboxylate,
2-(N,N-diphenylamino)ethyl 5-(2,2-dimethylpropylenedioxyphosphinyl)-2,6-dimethyl-1,4-dihydro-4-(2,3-dichlorophenyl)-pyridine-3-carboxylate, 3-(4-diphenylmethyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate,
2-(4-bis(4-fluorophenyl)methyl-1-piperazinyl)propyl 5-(2,2-dimethylpropylenedioxyphosphinyl)-2,6-dimethyl-1,4-dihydro-4-(2,3-dichlorophenyl)-pyridine-3-carboxylate,

1-methyl-2-(N-benzyl-N-phenylamino)ethyl 5-(2,2-dimethylpropylenedioxyphosphinyl)-2,6-dimethyl-1,4-dihydro-4-(2,3-dichlorophenyl)-pyridine-3-carboxylate or
2-(4-diphenylmethyl-1-piperazinyl)ethyl 5-(2,2-dimethylpropylenedioxyphosphinyl)-2,6-dimethyl-1,4-dihydro-4-(2-difluoromethoxyphenyl)-pyridine-3-carboxylate, or a pharmaceutically acceptable salt thereof, or a solvate of the compound or the salt.

19. Use of a compound of the formula I as defined in claim 1 or a pharmaceutically acceptable salt thereof or a solvate of the compound or the salt for preparing a pharmaceutical composition for treating hypertension in a subject in need of such treatment.

20. Use of a compound of the formula I as defined in claim 1 or a pharmaceutically acceptable salt thereof or a solvate of the compound or the salt for preparing a pharmaceutical composition for producing coronary vasodilation in apatient in need of such treatment.

21. Use of a compound of the formula I as defined in claim 1 or a pharmaceutically acceptable salt thereof or a solvate of the compound or the salt for preparing a pharmaceutical composition for producing cerebral vasodilation in a patient in need of such treatment.

**Patentansprüche für die Vertragsstaaten BE, CH, DE, FR, GB, GR, IT, LU, NL, SE**

1. Verbindung der Formel

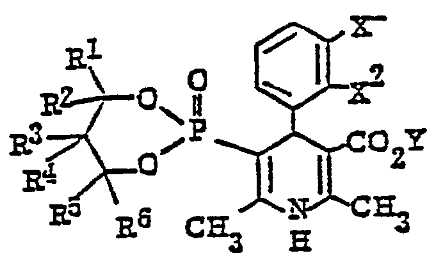

(I)

wobei jeder der Reste $R^1$, $R^2$, $R^3$, $R^4$, $R^5$ und $R^6$, welche gleich oder verschieden sein können, für Wasserstoff oder $C_1$–$C_4$-Alkyl stehen; einer der Reste $X^1$ und $X^2$ für Nitro, Fluor, Chlor, Difluormethoxy oder Trifluormethyl steht und der andere für Wasserstoff steht oder beide Reste $X^1$ und $X^2$ Chlor sind; und Y für

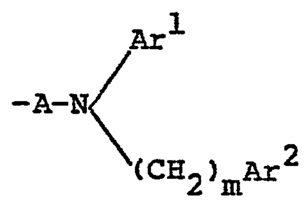

wobei A für $C_2$–$C_6$-Alkylen steht, jeder der Reste $Ar^1$ und $Ar^2$, welche gleich oder verschieden sein können, für Phenyl steht, das substituiert sein kann durch Chlor, Fluor oder $C_1$–$C_3$-Alkoxy, und m für eine ganze Zahl von 0 bis 4 steht, oder Y für

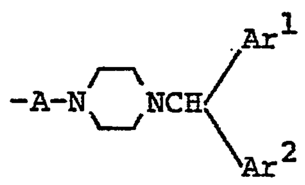

steht, wobei A, $Ar^1$ und $Ar^2$ wie oben definiert sind, falls $X^1$ für Wasserstoff steht und $X^2$ für Difluoromethoxy steht oder falls beide Reste $X^1$ und $X^2$ Chlor sind; oder ein pharmazeutisch akzeptables Salz derselben oder ein Solvat der Verbindung oder des Salzes.

2. Verbindung gemäß Anspruch 1, wobei einer der Reste $X^1$ und $X^2$ für Nitro oder Chlor steht und der andere für Wasserstoff steht oder beide Reste $X^1$ und $X^2$ Chlor sind.

3. Verbindung gemäß Anspruch 2, wobei jeder der Reste $R^1$, $R^2$, $R^3$, $R^4$, $R^5$ und $R^6$, welche gleich oder verschieden sein können, für Wasserstoff oder Methyl steht.

4. Verbindung gemäß Anspruch 3, wobei A für $-CH_2CH_2-$, $-(CH_2)_3-$ oder $-CH(CH_3)CH_2-$ steht, und m für 1 steht.

5. Verbindung gemäß Anspruch 4, wobei jeder der Reste $Ar^1$ und $Ar^2$, welche gleich oder verschieden sein können, für Phenyl oder p-Fluorphenyl steht.

6. Verbindung gemäß Anspruch 5, wobei $-C(R^1)(R^2)C(R^3)(R^4)C(R^5)(R^6)-$ für $-CH_2C(CH_3)_2CH_2-$, $-C(CH_3)_2CH_2C(CH_3)_2-$ oder $-CH(CH_3)CH_2CH(CH_3)-$ steht.

7. Verbindung gemäß Anspruch 1, wobei $X^1$ für Nitro steht, $X^2$ für Wasserstoff steht oder beide Reste $X^1$ und $X^2$ Chlor sind; $-C(R^1)(R^2)C(R^3)(R^4)C(R^5)(R^6)-$ für $-CH_2C(CH_3)_2CH_2-$, $-C(CH_3)_2CH_2C(CH_3)_2-$ oder $-CH(CH_3)CH_2CH(CH_3)-$ steht; A für $-CH(CH_3)CH_2-$ oder $-CH_2CH_2-$ steht; und Y = für

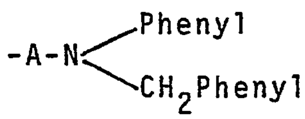

steht.

8. Verbindung gemäß Anspruch 7, wobei $X^1$ für Nitro steht, $X^2$ für Wasserstoff steht.

9. Verbindung gemäß Anspruch 1, wobei $X^1$ für Wasserstoff steht, $X^2$ für Difluormethoxy steht oder beide Reste $X^1$ und $X^2$ Chlor sind; $-C(R^1)(R^2)C(R^3)(R^4)C(R^5)(R^6)-$ für $-C(CH_3)_2CH_2C(CH_3)_2-$, $-CH(CH_3)CH_2CH(CH_3)-$ oder $-CH_2C(CH_3)_2CH_2-$ steht; A für $-CH(CH_3)CH_2-$, $-CH_2CH_2-$ oder $CH_2CH_2CH-$ steht; $Ar^1$ und $Ar^2$, welche gleich oder verschieden sein können, für Phenyl oder p-Fluorphenyl stehen; und Y für

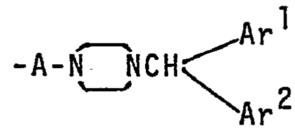

steht.

10. Verbindung gemäß Anspruch 1, wobei beide Reste $X^1$ und $X^2$ Chlor sind; $-C(R^1)(R^2)C(R^3)(R^4)C(R^5)(R^6)-$ für $-CH_2C(CH_3)_2CH_2-$ steht; A für $-CH_2CH_2-$ oder $-CH_2CH_2CH_2-$ steht; $Ar^1$ und $Ar^2$ für Phenyl oder p-Fluorphenyl stehen; und Y für

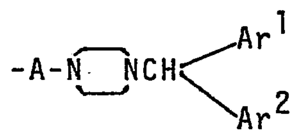

steht.

11. Verbindung gemäß Anspruch 1 mit der Formel

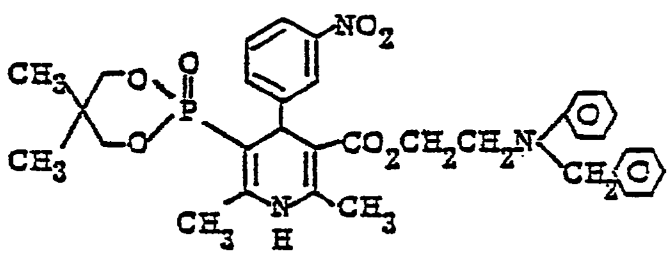

oder ein pharmazeutisch akzeptables Salz derselben.

12. Verbindung gemäß Anspruch 1 mit der Formel

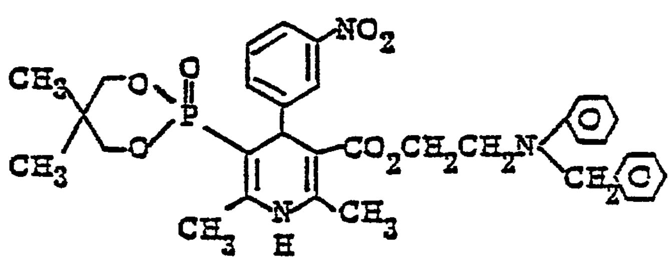 ·Lösungsmittel

wobei Lösungsmittel für Benzol oder Toluol steht.

13. Solvat von einem pharmazeutisch akzeptablen Salz der Verbindung gemäß Anspruch 1 mit der Formel

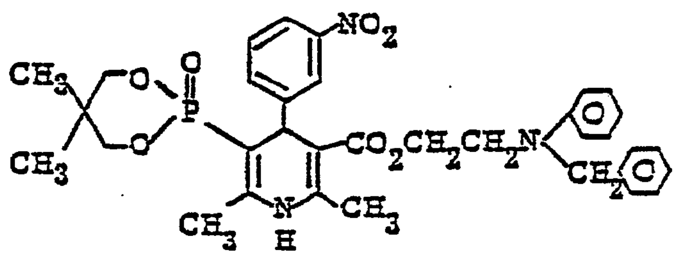 · Säure · Lösungsmittel

wobei Lösungsmittel für Ethanol oder Acetonitril steht.

14. Verbindung gemäß Anspruch 1, nämlich 2-(4-Diphenylmethyl-1-piperazinyl)ethyl-5-(2,2-dimethylpropylen dioxyphosphinyl)-2,6-dimethyl-1,4-dihydro-4-(2,3-dichlorphenyl)-pyridin-3-carboxylat, 3-(4-bis(4-Fluorophenyl)-methyl-1-piperazinyl)propyl-5-(2,2-dimethylpropylendioxyphosphinyl)-2,6-dimethyl-1,4-dihydro-4-(2,3-dichlorphenyl)-pyridin-3-carboxylat, 1-Methyl-2-(N-benzyl-N-phenylamino)ethyl-5-(1,1,3,3-tetramethylpropylendioxyphosphinyl)-2,6-dimethyl-1,4-dihydro-4-(3-nitrophenyl)-pyridin-3-carboxylat, 2-(N-Benzyl-N-phenylamino)ethyl-5-(1,1,3,3-tetramethylpropylendioxyphosphinyl)-2,6-dimethyl-1,4-dihydro-4-(3-nitrophenyl)-pyridin-3-carboxylat, 1-Methyl-2-(N-benzyl-N-phenylamino)ethyl-5-(1(R), 3(R)-dimethylpropylendioxyphosphinyl)-2,6-dimethyl-1,4-dihydro-4-(2,3-dichlorphenyl)-pyridin-3-carboxylat, 2-(N-Benzyl-N-phenylamino)-ethyl-5-(1(R), 3(R)-dimethylpropylendioxyphosphinyl)-2,6-dimethyl-1,4-dihydro-4-(3-nitrophenyl)-pyridin-3-carboxylat, 2-(N,N-Diphenylamino)ethyl-5-(2,2-dimethylpropylendioxyphosphinyl)-2,6-dimethyl-1,4-dihydro-4-(2,3-dichlorphenyl)-pyridin-3-carboxylat, 3-(4-Diphenylmethyl-1-piperazinyl)propyl-5-(2,2-dimethylpropylendioxyphosphinyl)-2,6-dimethyl-1,4-dihydro-4-(2,3-dichlorphenyl)-pyridin-3-carboxylat, 2-(4-bis(4-Fluorphenyl)methyl-1-piperazinyl)propyl-5-(2,2-dimethylpropylendioxyphosphinyl)-2,6-dimethyl-1,4-dihydro-4-(2,3-dichlorphenyl)-pyridin-3-carboxylat, 1-Methyl-2-(N-benzyl-N-phenylamino)ethyl-5-(2,2-dimethylpropylendioxyphosphinyl)-2,6-dimethyl-1,4-dihydro-4-(2,3-dichlorphenyl)-pyridin-3-carboxylat oder 2-(4-Diphenylmethyl-1-piperazinyl)ethyl-5-(2,2-dimethylpropylendioxyphosphinyl)-2,6-dimethyl-1,4-dihydro-4-(2-difluormethoxyphenyl)-pyridin-3-carboxylat, oder ein pharmazeutisch akzeptables Salz derselben oder ein Solvat der Verbindung oder des Salzes.

15. Verfahren zur Herstellung einer Verbindung der Formel

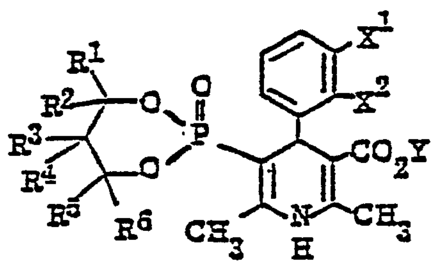

(I)

wobei jeder der Reste $R^1$, $R^2$, $R^3$, $R^4$, $R^5$ und $R^6$, welche gleich oder verschieden sein können, für Wasserstoff oder $C_1$–$C_4$-Alkyl stehen; einer der Reste $X^1$ und $X^2$ für Nitro, Fluor, Chlor, Difluormethoxy oder Trifluormethyl steht und der andere für Wasserstoff steht oder beide Reste $X^1$ und $X^2$ Chlor sind, und Y für

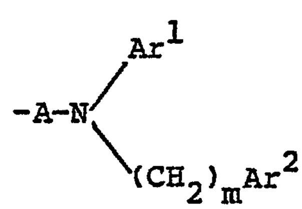

wobei A für $C_1$–$C_6$-Alkylen steht, jeder der Reste $Ar^1$ und $Ar^2$, welche gleich oder verschieden sein können, für Phenyl steht, das substituiert sein kann durch Chlor, Fluor oder $C_1$–$C_3$-Alkoxy, und m für eine ganze Zahl von 0 bis 4 steht, oder Y für

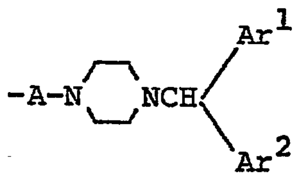

steht, wobei A, $Ar^1$ und $Ar^2$ wie oben definiert sind, falls $X^1$ für Wasserstoff steht und $X^2$ für Difluormethoxy steht oder falls beide Reste $X^1$ und $X^2$ Chlor sind; oder ein pharmazeutisch akzeptables Salz derselben oder ein Solvat der Verbindung oder des Salzes, umfassend die Umsetzung einer Verbindung der Formel

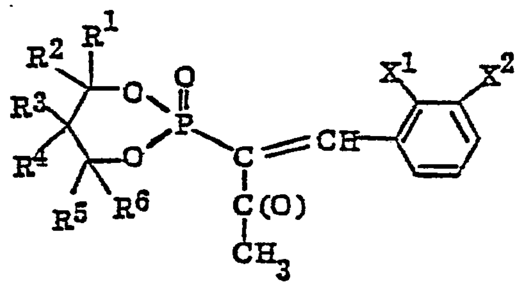

(II)

wobei $R^1$, $R^2$, $R^3$, $R^4$, $R^5$, $R^6$, $X^1$ und $X^2$ wie oben definiert sind, mit einer Verbindung der Formel

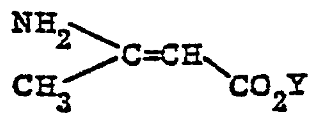

. (III)

wobei Y wie oben definiert ist, gegebenenfalls die Umwandlung der resultierenden Verbindung der Formel I in ihr pharmazeutisch akzeptables Salz und gegebenenfalls die Umwandlung der Verbindung der Formel I oder des Salzes in ein Solvat.

16. Antihypertensives, als Coronar- oder cerebraler Vasodilator wirksames Mittel, umfassend

(a) eine antihypertensiv, als Coronar- oder cerebraler Vasodilator wirksame Menge der Verbindung gemäß Anspruch 1 und

(b) einen pharmazeutisch akzeptablen Verdünnungsstoff oder Träger.

17. Verwendung einer Verbindung gemäß Anspruch 1 zur Herstellung einer pharmazeutischen Zusammensetzung zur Behandlung von Hypertension in einem Patienten, der einer derartigen Behandlung bedarf.

18. Verwendung einer Verbindung gemäß Anspruch 1 zur Herstellung einer pharmazeutischen Zusammensetzung zur Erzeugung von coronarer Vasodilation bei einem Patienten, der einer derartigen Behandlung bedarf.

19. Verwendung einer Verbindung gemäß Anspruch 1 zur Herstellung einer pharmazeutischen Zusammensetzung zur Erzeugung von cerebraler Vasodilation bei einem Patienten, der einer derartigen Behandlung bedarf.

20. Verfahren zur Herstellung einer Verbindung der Formel I gemäß Anspruch 1 oder eines pharmazeutisch akzeptablen Salzes derselben oder eines Solvats der Verbindung oder des Salzes, umfassend die Umsetzung der folgenden drei Ausgangsmaterialien

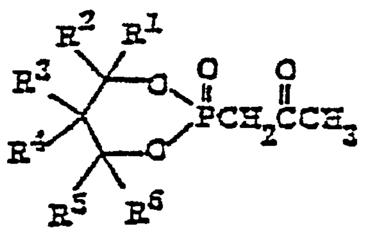 , 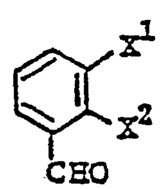 et 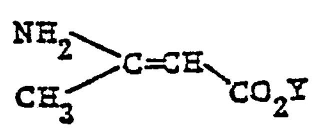

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

21. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden beiden Ausgangsmaterialien

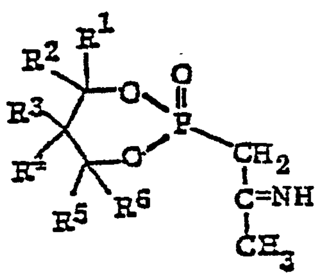

et

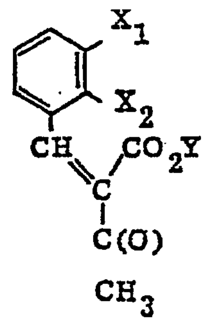

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

22. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden drei Ausgangsmaterialien

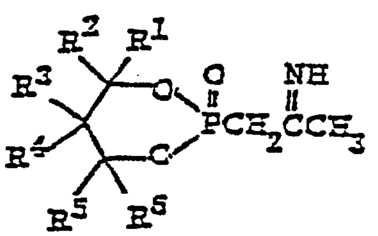

,

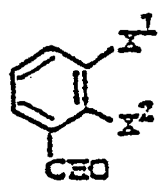

und

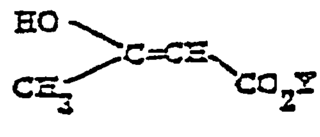

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

23. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden drei Ausgangsmaterialien in Gegenwart einer α-Halogenalkansäure

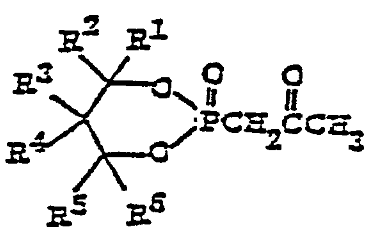

,

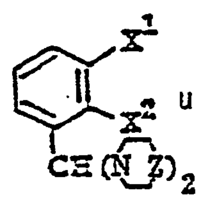

und

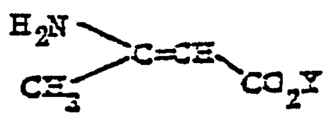

wobei $R^1$, $R^2$, $R^3$, $R^4$, $R^5$, $R^6$, $X^1$, $X^2$ und Y wie in Anspruch 1 definiert sind und Z für –O– oder $-CH_2-$ steht, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

**Patentansprüche für die Vertragsstaaten AT und ES**

1. Verfahren zur Herstellung einer Verbindung der Formel

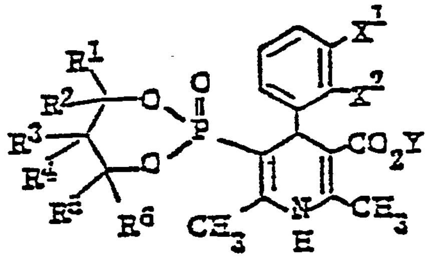

(I)

wobei jeder der Reste $R^1$, $R^2$, $R^3$, $R^4$, $R^5$ und $R^6$, welche gleich oder verschieden sein können, für Wasserstoff oder $C_1$–$C_4$-Alkyl stehen; einer der Reste $X^1$ und $X^2$ für Nitro, Fluor, Chlor, Difluormethoxy oder Trifluormethyl steht und der andere für Wasserstoff steht oder beide Reste $X^1$ und $X^2$ Chlor sind; und Y für

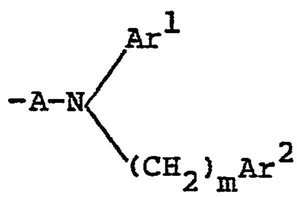

wobei A für $C_2$–$C_6$-Alkylen steht, jeder der Reste $Ar^1$ und $Ar^2$, welche gleich oder verschieden sein können, für Phenyl steht, das substituiert sein kann durch Chlor, Fluor oder $C_1$–$C_3$-Alkoxy, und m für eine ganze Zahl von 0 bis 4 steht, oder Y für

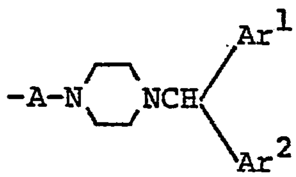

steht, wobei A, $Ar^1$ und $Ar^2$ wie oben definiert sind, falls $X^1$ für Wasserstoff steht und $X^2$ für Difluormethoxy steht oder falls beide Reste $X^1$ und $X^2$ Chlor sind; oder ein pharmazeutisch akzeptables Salz derselben oder ein Solvat der Verbindung oder des Salzes, umfassend die Umsetzung einer Verbindung der Formel

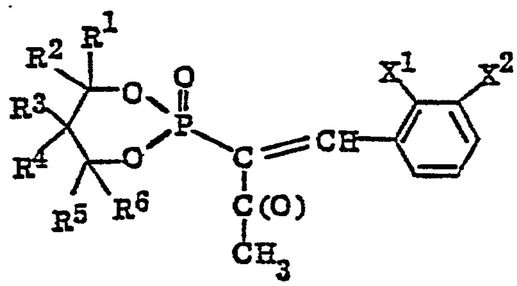

(II)

wobei $R^1$, $R^2$, $R^3$, $R^4$, $R^5$, $R^6$, $X^1$ und $X^2$ wie oben definiert sind, mit einer Verbindung der Formel

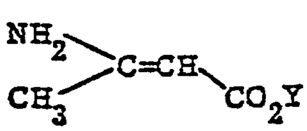

(III)

wobei Y wie oben definiert ist, gegebenenfalls die Umwandlung der resultierenden Verbindung der Formel I in ihr pharmazeutisch akzeptables Salz und gegebenenfalls die Umwandlung der Verbindung der Formel I oder des Salzes in ein Solvat.

2. Verfahren zur Herstellung einer Verbindung der Formel I, gemäß Anspruch 1 oder eines pharmazeutisch akzeptablen Salzes derselben oder eines Solvats der Verbindung oder des Salzes, umfassend die Umsetzung der folgenden drei Ausgangsmaterialien

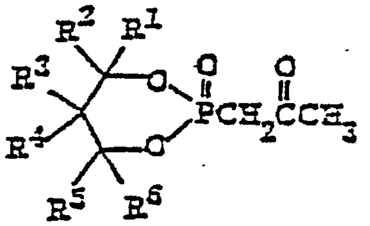 , 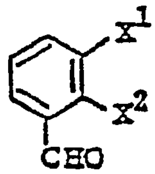 et 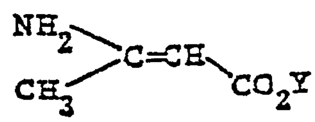

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

3. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden beiden Ausgangsmaterialien

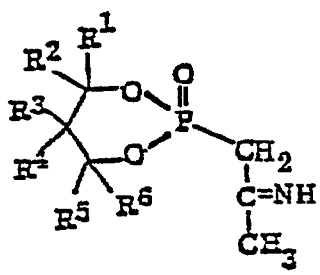 et 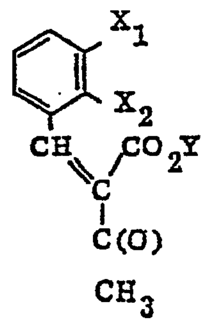

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

4. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden drei Ausgangsmaterialien

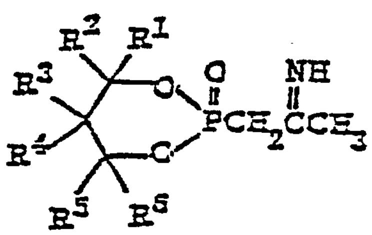 , 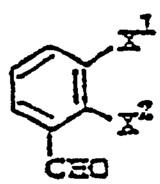 und 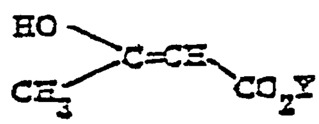

wobei $R^1$, $R^2$, $R^3$, $R^4$, $R^5$, $R^6$, $X^1$, $X^2$ und Y wie in Anspruch 1 definiert sind, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

5. Verfahren zur Herstellung einer Verbindung der Formel I, wie sie in Anspruch 1 definiert ist, oder eines pharmazeutisch akzeptablen Salzes derselben oder eines Solvats der Verbindung oder des Salzes, umfassend die Umsetzung der folgenden drei Ausgangsmaterialien in Gegenwart einer α-Halogenalkansäure

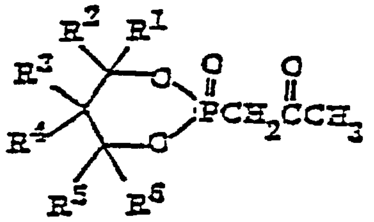 , 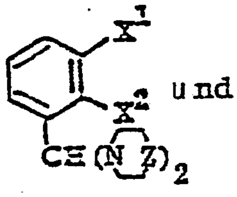 und 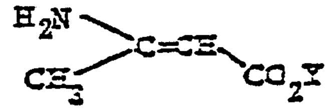

wobei $R^1$, $R^2$, $R^3$, $R^4$, $R^5$, $R^6$, $X^1$, $X^2$ und Y wie in Anspruch 1 definiert sind und Z für –O– oder $-CH_2-$ steht, gegebenenfalls die Umwandlung der resultierenden Verbindung der Formel I in ihr pharmazeutisch akzeptables Salz, und gegebenenfalls die Umwandlung der Verbindung der Formel I oder des Salzes in ein Solvat.

6. Verfahren gemäß Anspruch 1, wobei einer der Reste $X^1$ und $X^2$ für Nitro oder Chlor steht und der andere für Wasserstoff steht oder beide Reste $X^1$ und $X^2$ Chlor sind.

7. Verfahren gemäß Anspruch 6, wobei jeder der Reste $R^1$, $R^2$, $R^3$, $R^4$, $R^5$ und $R^6$, welche gleich oder verschieden sein können, für Wasserstoff oder Methyl steht.

8. Verfahren gemäß Anspruch 7, wobei A für $-CH_2CH_2-$, $-(CH_2)_3-$ oder $-CH(CH_3)CH_2-$ steht, und m für 1 steht.

9. Verfahren gemäß Anspruch 8, wobei jeder der Reste $Ar^1$ und $Ar^2$, welche gleich oder verschieden sein können, für Phenyl oder p-Fluorphenyl steht.

10. Verfahren gemäß Anspruch 9, wobei
$-C(R^1)(R^2)C(R^3)(R^4)C(R^5)(R^6)-$ für $-CH_2C(CH_3)_2CH_2-$,
$-C(CH_3)_2CH_2C(CH_3)_2-$ oder $-CH(CH_3)CH_2CH(CH_3)-$ steht.

11. Verfahren gemäß Anspruch 1, wobei $X^1$ für Nitro steht, $X^2$ für Wasserstoff steht oder beide Reste $X^1$ und $X^2$ Chlor sind;
$-C(R^1)(R^2)C(R^3)(R^4)C(R^5)(R^6)-$ für $-CH_2C(CH_3)_2CH_2-$,
$-C(CH_3)_2CH_2C(CH_3)_2-$ oder $-CH(CH_3)CH_2CH(CH_3)-$ steht; A für
$-CH(CH_3)CH_2-$ oder $-CH_2CH_2-$ steht; und Y = für

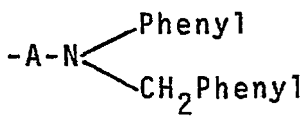

steht.

12. Verfahren gemäß Anspruch 11, wobei $X^1$ für Nitro steht, $X^2$ für Wasserstoff steht.

13. Verfahren gemäß Anspruch 1, wobei $X^1$ für Wasserstoff steht, $X^2$ für Difluormethoxy steht oder beide Reste $X^1$ und $X^2$ Chlor sind; $-C(R^1)(R^2)C(R^3)(R^4)C(R^5)(R^6)-$ für $-C(CH_3)_2CH_2C(CH_3)_2-$, $-CH(CH_3)CH_2CH(CH_3)-$ oder $-CH_2C(CH_3)_2CH_2-$ steht; A für $-CH(CH_3)CH_2-$, $-CH_2CH_2-$ oder $CH_2CH_2CH_2-$ steht; $Ar^1$ und $Ar^2$, welche gleich oder verschieden sein können, für Phenyl oder p-Fluorphenyl stehen; und Y für

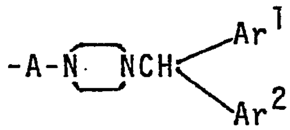

steht.

14. Verfahren gemäß Anspruch 1, wobei beide Reste $X^1$ und $X^2$ Chlor sind;
$-C(R^1)(R^2)C(R^3)(R^4)C(R^5)(R^6)-$ für $-CH_2C(CH_3)_2CH_2-$ steht; A für $-CH_2CH_2-$ oder $-CH_2CH_2CH_2-$ steht; $Ar^1$ und $Ar^2$ für Phenyl oder p-Fluorphenyl stehen; und Y für

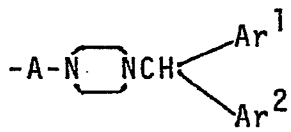

steht.

15. Verfahren gemäß Anspruch 1, wobei man eine Verbindung mit der Formel

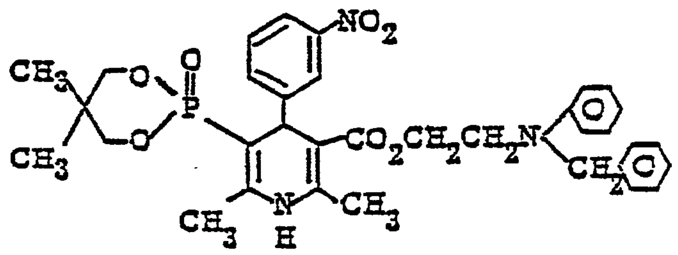

oder ein pharmazeutisch akzeptables Salz derselben erhält.

16. Verfahren gemäß Anspruch 1, wobei man eine Verbindung mit der Formel

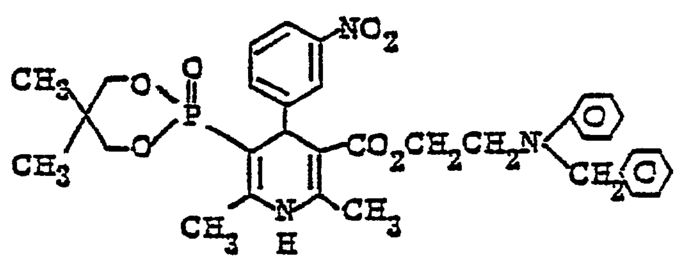

· Lösungsmittel

wobei Lösungsmittel für Benzol oder Toluo steht, erhält.

17. Verfahren gemäß Anspruch 1, wobei man ein Solvat von einem pharmazeutisch akzeptablen Salz der Verbindung gemäß Anspruch 1 mit der Formel

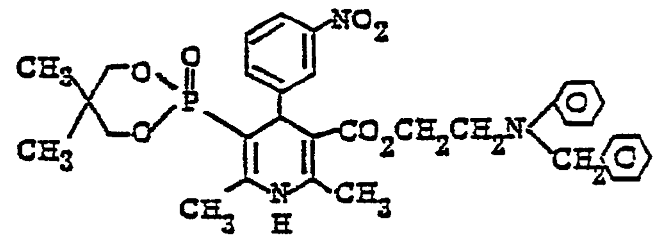

· Säure · Lösungsmittel

wobei Lösungsmittel für Ethanol oder Acetonitril steht, erhält.

18. Verfahren gemäß Anspruch 1 zur Herstellung folgender Verbindungen 2-(4-Diphenylmethyl-1-piperazinyl)ethyl-5-(2,2-dimethylpropylendioxyphosphinyl)-2,6-dimethyl-1,4-dihydro-4-(2,3-dichlorphenyl)-pyridin-3-carboxylat, 3-(4-bis(4-Fluorophenyl)-methyl-1-piperazinyl)-propyl-5-(2,2-dimethylpropylendioxyphosphinyl)-2,6-dimethyl-1,4-dihydro-4-(2,3-dichlorphenyl)-pyridin-3-carboxylat, 1-Methyl-2-(N-benzyl-N-phenylamino)ethyl-5-(1,1,3,3-tetramethylpropylendioxyphosphinyl)-2,6-dimethyl-1,4-dihydro-4-(3-nitrophenyl)-pyridin-3-carboxylat, 2-(N-Benzyl-N-phenylamino)ethyl-5-(1,1,3,3-tetramethylpropylendioxyphosphinyl)-2,6-dimethyl-1,4-dihydro-4-(3-nitrophenyl)-pyridin-3-carboxylat, 1-Methyl-2-(N-benzyl-N-phenylamino)ethyl-5-(1(R), 3(R)-dimethylpropylendioxyphosphinyl)-2,6-dimethyl-1,4-dihydro-4-(2,3-dichlorphenyl)-pyridin-3-carboxylat, 2-(N-Benzyl-N-phenylamino)ethyl-5-(1(R), 3(R)-dimethylpropylendioxyphosphinyl)-2,6-dimethyl-1,4-dihydro-4-(3-nitrophenyl)-pyridin-3-carboxylat, 2-(N,N-Diphenylamino)ethyl-5-(2,2-dimethylpropylendioxyphosphinyl)-2,6-dimethyl-1,4-dihydro-4-(2,3-dichlorphenyl)-pyridin-3-carboxylat, 3-(4-Diphenylmethyl-1-piperazinyl) propyl-5-(2,2-dimethylpropylendioxyphosphinyl)-2,6-dimethyl-1,4-dihydro-4-(2,3-dichlorphenyl)-pyridin -3-carboxylat, 2-(4-bis(4-Fluorphenyl)methyl-1-piperazinyl)propyl-5-(2,2-dimethylpropylendioxyphosphinyl)-2,6-dimethyl-1,4-dihydro-4-(2,3-dichlorphenyl)-pyridin-3-carboxylat, 1-Methyl-2-(N-benzyl-N-phenylamino)ethyl-5-(2,2-dimethylpropylendioxyphosphinyl)-2,6-dimethyl-1,4-dihydro-4-(2,3-dichlorphenyl)-pyridin-3-carboxylat oder 2-(4-Diphenylmethyl-1-piperazinyl)ethyl-5-(2,2-dimethylpropylendioxyphosphinyl)-2,6-dimethyl-1,4-dihydro-4-(2-difluormethoxyphenyl)-pyridin-3-carboxylat, oder eines pharmazeutisch akzeptablen Salzes derselben oder eines Solvates der Verbindung oder des Salzes.

19. Verwendung einer Verbindung der Formel I, wie sie in Anspruch 1 definiert ist, oder eines pharmazeutisch akzeptablen Salzes derselben oder eines Solvats der Verbindung oder des Salzes zur Herstellung einer pharmazeutischen Zusammensetzung zur Behandlung von Hypertension in einem Patienten, der einer derartigen Behandlung bedarf.

20. Verwendung einer Verbindung der Formel I, wie sie in Anspruch 1 definiert ist, oder eines pharmazeutisch akzeptablen Salzes derselben oder eines Solvats der Verbindung oder des Salzes zur Herstellung einer pharmazeutischen Zusammensetzung zur Erzeugung von coronarer Vasodilation in einem Patienten, der einer derartigen Behandlung bedarf.

21. Verwendung einer Verbindung der Formel I, wie sie in Anspruch 1 definiert ist, oder eines pharmazeutisch akzeptablen Salzes derselben oder eines Solvats der Verbindung oder des Salzes zur Herstellung einer pharmazeutischen Zusammensetzung zur Erzeugung von cerebraler Vasodilation in einem Patienten, der einer derartigen Behandlung bedarf.

**Revendications pour les Etats Contractants BE, CH, DE, FR, GB, GR, IT, LU, NL, SE**

1. Composé représenté par la formule:

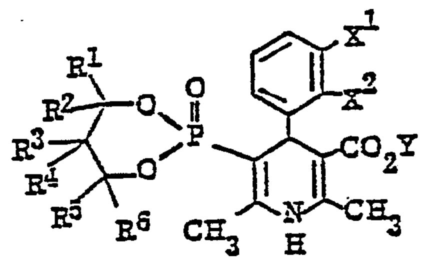

(I)

dans laquelle:
– $R^1$, $R^2$, $R^3$, $R^4$, $R^5$ et $R^6$, qui peuvent être identiques ou différents, représentent chacun hydrogène ou alkyle en $C_1$–$C_4$;
– l'un parmi $X^1$ et $X^2$ représente nitro, fluor, chlore, difluorométhoxy ou trifluorométhyle, et l'autre représente hydrogène, ou $X^1$ et $X^2$ représentent tous deux chlore; et
– Y représente:

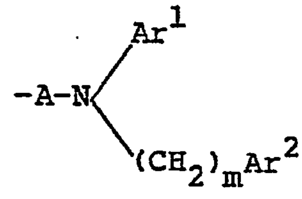

où:
– A représente alkylène en $C_2$–$C_6$;
– $Ar^1$ et $Ar^2$, qui peuvent être identiques ou différents, représentent chacun phényle qui peut-être substitué par chlore, fluor ou alcoxy en $C_1$–$C_3$; et
– m est un nombre entier allant de 0 à 4; ou Y représente:

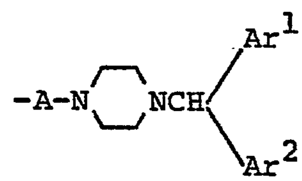

où A, $Ar^1$ et $Ar^2$ sont tels que définis ci-dessus lorsque $X^1$ représente hydrogène et $X^2$ représente difluorométhoxy ou lorsque $X^1$ et $X^2$ représentent tous deux chlore;
ou un sel pharmaceutiquement acceptable de ce composé, ou un solvate du composé ou du sel.

2. Composé selon la revendication 1, dans lequel l'un parmi $X^1$ et $X^2$ représente nitro ou chlore et l'autre représente hydrogène, ou $X^1$ et $X^2$ représentent tous deux chlore.

3. Composé selon la revendication 2, dans lequel $R^1$, $R^2$, $R^3$, $R^4$, $R^5$ et $R^6$, qui peuvent être identiques ou différents, représentent chacun hydrogène ou méthyle.

4. Composé selon la revendication 3, dans lequel A représente $-CH_2CH_2-$, $-(CH_2)_3-$ ou $-CH(CH_3)CH_2-$, et m vaut un.

5. Composé selon la revendication 4, dans lequel $Ar^1$ et $Ar^2$, qui peuvent être identiques ou différents, représentent chacun phényle ou p-fluorophényle.

6. Composé selon la revendication 5, dans lequel $-C(R^1)(R^2)C(R^3)(R^4)C(R^5)(R^6)-$ représente $-CH_2C(CH_3)_2CH_2-$, $-C(CH_3)_2CH_2C(CH_3)_2-$ ou $-CH(CH_3)CH_2CH(CH_3)-$.

7. Composé selon la revendication 1, dans lequel:
– $X^1$ représente nitro, $X^2$ représente hydrogène, ou $X^1$ et $X^2$ représentent tous deux chlore;

– $-C(R^1)(R^2)C(R^3)(R^4)C(R^5$ $(R^6)-$ représente $-CH_2C(CH_3)_2CH_2-$ $-C(CH_3)_2CH_2C(CH_3)_2-$ ou $-CH(CH_3)CH_2CH(CH_3)-$;
– A représente $-CH(CH_3)CH_2-$ ou $-CH_2CH_2-$; et
– Y = représente

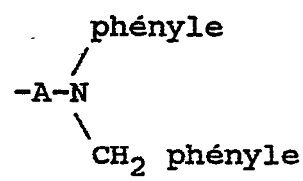

8. Composé selon la revendication 7, dans lequel $X^1$ représente nitro, $X^2$ représente hydrogène.

9. Composé selon la revendication 1, dans lequel:
– $X^1$ représente hydrogène, $X^2$ représente difluorométhoxy ou $X^1$ et $X^2$ représentent tous deux chlore;
– $-C(R^1)(R^2)C(R^3)(R^4)C(R^5)(R^6)-$ représente $-C(CH_3)_2CH_2C(CH_3)_2-$, $-CH(CH_3)CH_2CH(CH_3)-$ ou $-CH_2C(CH_3)_2CH_2)-$;
A représente $-CH(CH_3)CH_2-$, $-CH_2CH_2-$ ou $-CH_2CH_2CH_2-$;
– $Ar^1$ et $Ar^2$, qui peuvent être identiques ou différents, représentent phényle ou p-fluorophényle; et
– Y représente

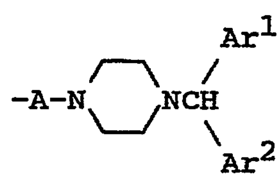

10. Composé selon la revendication 1, dans lequel:
– $X^1$ et $X^2$ représentent tous deux chlore;
– $-C(R^1)(R^2)C(R^3)(R^4)C(R^5)(R^6)-$ représente $-CH_2C(CH_3)_2CH_2-$;
– A représente $-CH_2CH_2-$ ou $-CH_2CH_2CH_2-$;
– $Ar^1$ et $Ar^2$ représentent phényle ou p-fluorophényle; et
– Y représente

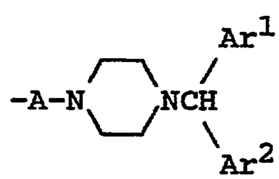

11. Composé selon la revendication 1, représenté par la formule:

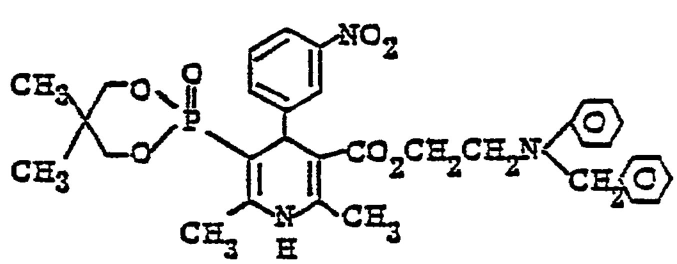

ou un sel pharmaceutiquement acceptable de ce composé.

12. Composé selon la revendication 1, représenté par la formule:

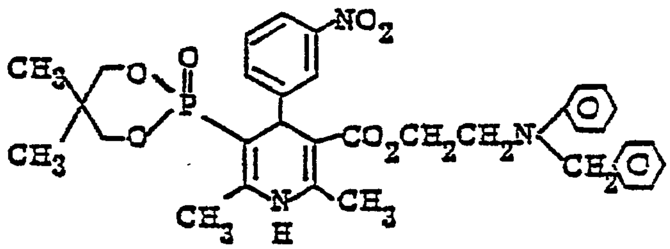

· solvant

où solvant représente benzène ou toluène.

13. Solvate d'un sel pharmaceutiquement acceptable du composé de la revendication 1, représenté par la formule:

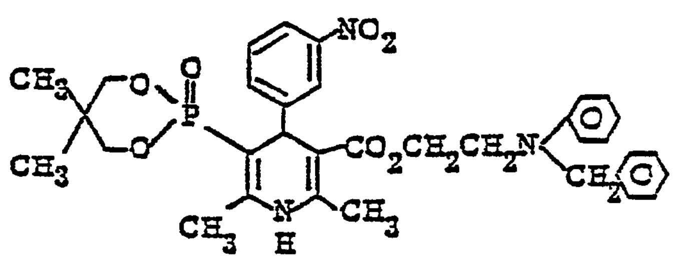

· acide · solvant

où solvant représente éthanol ou acétonitrile.

14. Composé selon la revendication 1, qui est

– le (diméthyl-2,2-propylènedioxyphosphinyl)-5 diméthyl-2,6 dihydro-1,4 (dichloro-2,3 phényl)-4 pyridine-carboxylate-3 de (diphénylméthyl-4 pipérazinyl-1)-2 éthyle;
– le (diméthyl-2,2 propylènedioxyphosphinyl)-5 diméthyl-2,6 dihydro-1,4 (dichloro-2,3 phényl)-4 pyridine-carboxylate-3 de (bis(fluoro-4 phényl)-méthyl-4 pipérazinyl-1)-3 propyle;
– le (tétraméthyl-1,1,3,3 propylènedioxyphosphinyl)-5 diméthyl-2,6 dihydro-1,4 (nitro-3 phényl)-4 pyridine-carboxylate-3 de méthyl-1 (N-benzyl-N-phénylamino)-2 éthyle;
– le (tétraméthyl-1,1,3,3 propylènedioxyphosphinyl)-5 diméthyl-2,6 dihydro-1,4 (nitro-3 phényl)-4 pyridine-carboxylate-3 de (N-benzyl-N-phénylamino)-2 éthyle;
– le (diméthyl-1(R), 3(R) propylènedioxyphosphinyl)-5 diméthyl-2,6 dihydro-1,4 (dichloro-2,3 phényl)-4 pyridine-carboxylate-3 de méthyl-1 (N-benzyl-N-phénylamino)-2 éthyle;
– le (diméthyl-1(R), 3(R) propylènedioxyphosphinyl)-5 diméthyl-2,6 dihydro-1,4 (nitro-3 phényl)-4 pyridine-carboxylate-3 de (N-benzyl-N-phénylamino)-2 éthyle;
– le (diméthyl-2,2 propylènedioxyphosphinyl)-5 diméthyl-2,6 dihydro-1,4 (dichloro-2,3 phényl)-4 pyridine-carboxylate-3 de (N,N-diphénylamino)-2 éthyle;
– le (diméthyl-2,2 propylènedioxyphosphinyl)-5 diméthyl-2,6 dihydro-1,4 (dichloro-2,3 phényl)-4 pyridine-carboxylate-3 de (diphénylméthyl-4 pipérazinyl-1)-3 propyle;
– le (diméthyl-2,2 propylènedioxyphosphinyl)-5 diméthyl-2,6 dihydro-1,4 (dichloro-2,3 phényl)-4 pyridine-carboxylate-3 de (bis(fluoro-4 phényl)méthyl-4 pipérazinyl-1)-2 propyle;
– le (diméthyl-2,2 propylènedioxyphosphinyl)-5 diméthyl-2,6 dihydro-1,4 (dichloro-2,3 phényl)-4 pyridine-carboxylate-3 de méthyl-1 (N-benzyl-N-phénylamino)-2 éthyle; ou
– le (diméthyl-2,2 propylènedioxyphosphinyl)-5 diméthyl-2,6 dihydro-1,4 (difluorométhoxy-2 phényl)-4 pyridine-carboxylate-3 de (diphénylméthyl-4 pipérazinyl-1)-2 éthyle,

ou un sel pharmaceutiquement acceptable de ce composé, ou un solvate du composé ou du sel.

15. Procédé de fabrication d'un composé représenté par la formule:

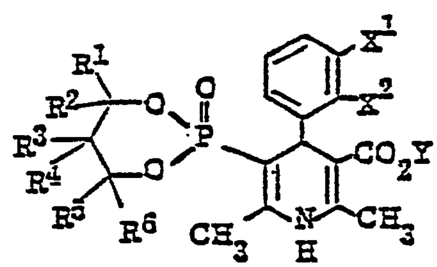

(I)

dans laquelle:

– $R^1$, $R^2$, $R^3$, $R^4$, $R^5$ et $R^6$, qui peuvent être identiques ou différents, représentent chacun hydrogène ou alkyle en $C_1$–$C_4$;

– l'un parmi $X^1$ et $X^2$ représente nitro, fluor, chlore, difluorométhoxy ou trifluorométhyle, et l'autre représente hydrogène, ou $X^1$ et $X^2$ représentent tous deux chlore; et

– Y représente:

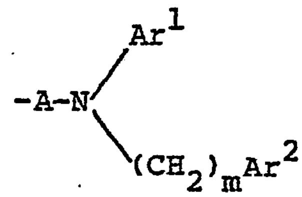

où:

– A représente alkylène en $C_2$–$C_6$;

– $Ar^1$ et $Ar^2$, qui peuvent être identiques ou différents, représentent chacun phényle qui peut-être substitué par chlore, fluor ou alcoxy en $C_1$–$C_3$; et

– m est un nombre entier allant de 0 à 4; ou

Y représente:

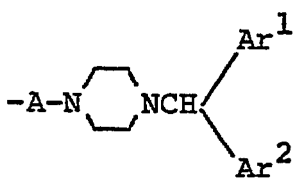

où A, $Ar^1$ et $Ar^2$ sont tels que définis ci-dessus lorsque $X^1$ représente hydrogène et $X^2$ représente difluorométhoxy ou lorsque $X^1$ et $X^2$ représentent tous deux chlore;

ou d'un sel pharmaceutiquement acceptable de ce composé; ou d'un solvate du composé ou du sel, qui comprend:

– la réaction d'un composé représenté par la formule:

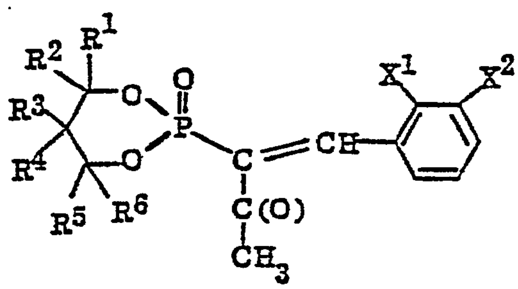

(II)

dans laquelle $R^1$, $R^2$, $R^3$, $R^4$, $R^5$, $R^6$, $X^1$ et $X^2$ sont tels que définis ci-dessus, avec un composé représenté par la formule:

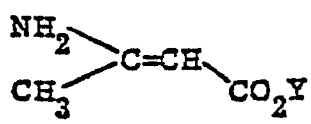

(III)

dans laquelle Y est tel que défini ci-dessus;

– de façon facultative, la conversion du composé résultant de formule (I) en son sel pharmaceutiquement acceptable; et

– de façon facultative, la conversion du composé de formule (I) ou du sel en un solvate.

16. Composition antihypertensive, vasodilatatrice coronarienne ou cérébrale comprenant:

(a) une quantité ayant une efficacité antihypertensive, vasodilatatrice coronarienne ou cérébrale du composé de la revendication 1; et

(b) un diluant ou support pharmaceutiquement acceptable.

17. Utilisation d'un composé selon la revendication 1 pour la préparation d'une composition pharmaceutique pour le traitement de l'hypertension chez un sujet nécessitant un tel traitement.

18. Utilisation d'un composé selon la revendication 1 pour la préparation d'une composition pharmaceutique pour la production d'une vasodilatation coronarienne chez un patient nécessitant un tel traitement.

19. Utilisation d'un composé selon la revendication 1 pour la préparation d'une composition pharmaceutique pour la production d'une vasodilatation cérébrale chez un patient nécessitant un tel traitement.

20. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des trois matières de départ suivantes:

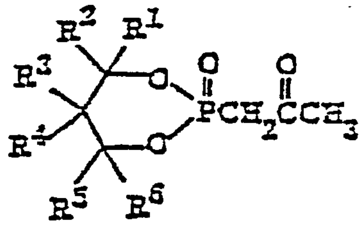 , 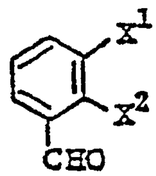 et 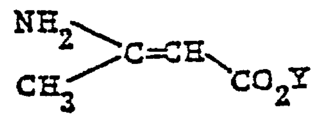

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

21. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des deux matières de départ suivantes:

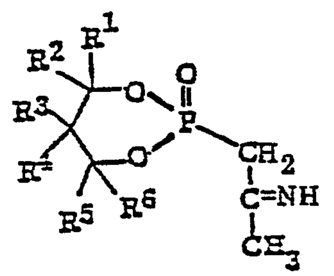 et 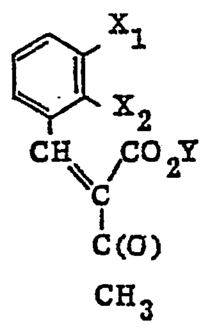

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

22. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des trois matières de départ suivantes:

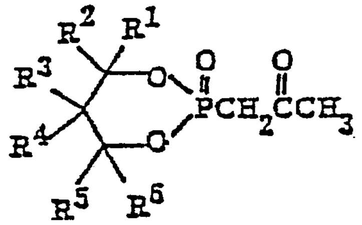 , 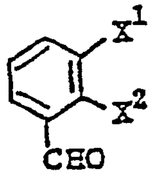 et 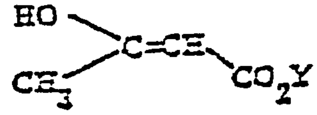

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

23. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des trois matières de départ suivantes en présence d'un acide α-halogénoalcanoïque:

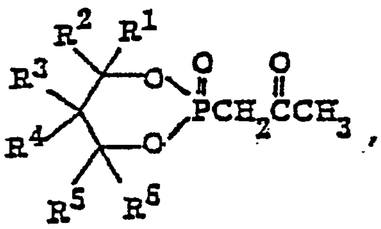,
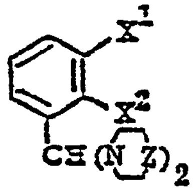
et
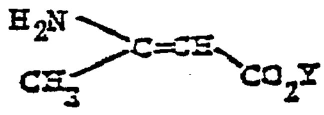

où:
– $R^1$, $R^2$, $R^3$, $R^4$, $R^5$, $R^6$, $X^1$, $X^2$ et Y sont tels que définis à la revendication 1; et
– Z représente –O– ou –$CH_2$–;
– de façon facultative, la conversion du composé résultant de formule (I) en son sel pharmaceutiquement acceptable; et
– de façon facultative, la conversion du composé de formule (I) ou du sel en un solvate.

**Revendications pour les Etats Contractants AT et ES**

1. Procédé de fabrication d'un composé représenté par la formule:

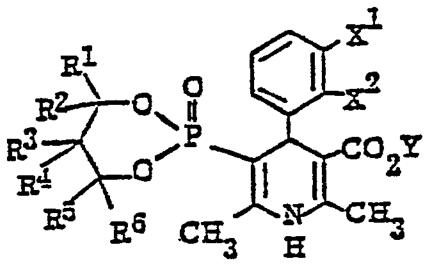
(I)

dans laquelle:
– $R^1$, $R^2$, $R^3$, $R^4$, $R^5$ et $R^6$, qui peuvent être identiques ou différents, représentent chacun hydrogène ou alkyle en $C_1$–$C_4$;
– l'un parmi $X^1$ et $X^2$ représente nitro, fluor, chlore, difluorométhoxy ou trifluorométhyle, et l'autre représente hydrogène, ou $X^1$ et $X^2$ représentent tous deux chlore; et
– Y représente:

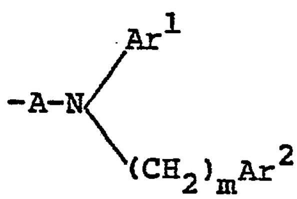

où:
– A représente alkylène en $C_2$–$C_6$;
– $Ar^1$ et $Ar^2$, qui peuvent être identiques ou différents, représentent chacun phényle qui peut-être substitué par chlore, fluor ou alcoxy en $C_1$–$C_3$; et
– m est un nombre entier allant de 0 à 4; ou
Y représente:

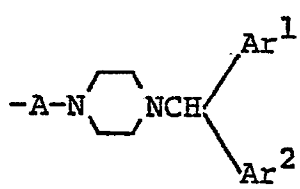

où A, $Ar^1$ et $Ar^2$ sont tels que définis ci-dessus lorsque $X^1$ représente hydrogène et $X^2$ représente difluorométhoxy ou lorsque $X^1$ et $X^2$ représentent tous deux chlore;
ou d'un sel pharmaceutiquement acceptable de ce composé, ou d'un solvate du composé ou du sel qui comprend:

– la réaction d'un composé représenté par la formule:

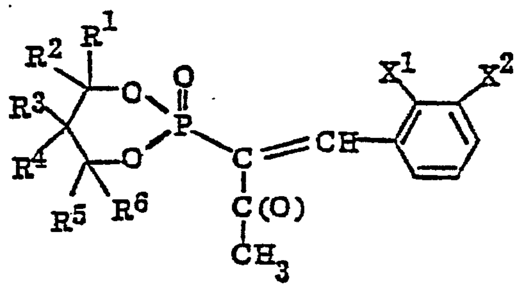

(II)

dans laquelle $R^1$, $R^2$, $R^3$, $R^4$, $R^5$, $R^6$, $X^1$ et $X^2$ sont tels que définis ci-dessus, avec un composé représenté par la formule:

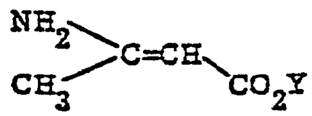

(III)

dans laquelle Y est tel que défini ci-dessus;
– de façon facultative, la conversion du composé résultant de formule (I) en son sel pharmaceutiquement acceptable; et
– de façon facultative, la conversion du composé de formule (I) ou du sel en un solvate.

2. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des trois matières de départ suivantes:

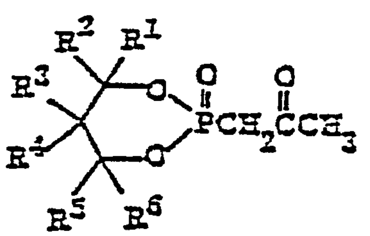

,

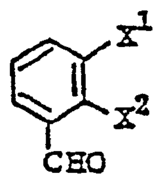

et

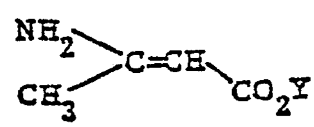

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

3. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des deux matières de départ suivantes:

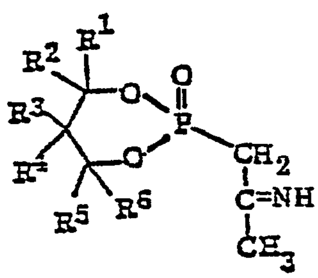

et

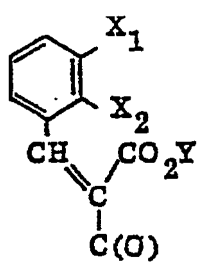

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

4. Procédé de fabrication d'un composé de formule (I) tel que défini à la revendication 1, ou d'un sel pharmaceutiquement acceptable de ce composé, ou d'un solvate du composé ou du sel, qui comprend:

– la réaction des trois matières de départ suivantes:

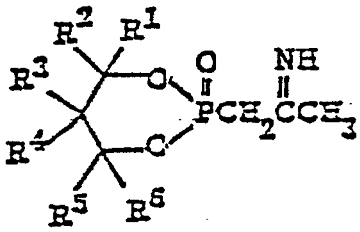, 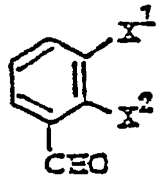 et 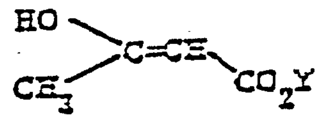

où $R^1$, $R^2$, $R^3$, $R^4$, $R^5$, $R^6$, $X^1$, $X^2$ et Y sont tels que définis à la revendication 1;
– de façon facultative, la conversion du composé résultant de formule (I) en son sel pharmaceutiquement acceptable; et
– de façon facultative, la conversion du composé de formule (I) ou du sel en un solvate.

5. Procédé de fabrication d'un composé de formule (I) tel que défini à la revendication 1, ou d'un sel pharmaceutiquement acceptable de ce composé, ou d'un solvate du composé ou du sel, qui comprend:
– la réaction des trois matières de départ suivantes en présence d'un acide α-halogénoalcanoïque:

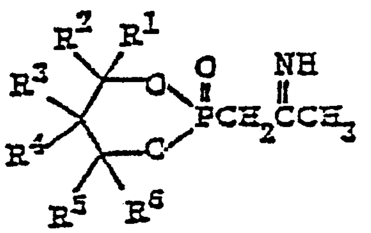, 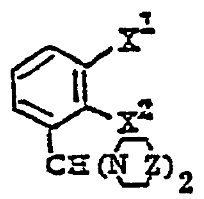 et 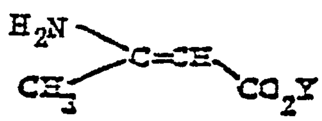

où:
– $R^1$, $R^2$, $R^3$, $R^4$, $R^5$, $R^6$, $X^1$, $X^2$ et Y sont tels que définis à la revendication 1; et
– Z représente –O– ou $-CH_2-$;
– de façon facultative, la conversion du composé résultant de formule (I) en son sel pharmaceutiquement acceptable; et
– de façon facultative, la conversion du composé de formule (I) ou du sel en un solvate.

6. Procédé selon la revendication 1, dans lequel l'un parmi $X^1$ et $X^2$ représente nitro ou chlore et l'autre représente hydrogène, ou $X^1$ et $X^2$ représentent tous deux chlore.

7. Procédé selon la revendication 6, dans lequel $R^1$, $R^2$, $R^3$, $R^4$, $R^5$ et $R^6$, qui peuvent être identiques ou différents, représentent chacun hydrogène ou méthyle.

8. Procédé selon la revendication 7, dans lequel A représente $-CH_2CH_2-$, $-(CH_2)_3-$ ou $-CH(CH_3)CH_2-$, et m vaut un.

9. Procédé selon la revendication 8, dans lequel $Ar^1$ et $Ar^2$, qui peuvent être identiques ou différents, représentent chacun phényle ou p-fluorophényle.

10. Procédé selon la revendication 9, dans lequel $-C(R^1)(R^2)C(R^3)(R^4)C(R^5)(R^6)-$ représente $-CH_2C(CH_3)_2CH_2-$, $-C(CH_3)_2CH_2C(CH_3)_2-$ ou $-CH(CH_3)CH_2CH(CH_3)-$.

11. Procédé selon la revendication 1, dans lequel:
– $X^1$ représente nitro, $X^2$ représente hydrogène, ou $X^1$ et $X^2$ représentent tous deux chlore;
– $-(R^1)(R^2)C(R^3)(R^4)C(R^5)(R^6)-$ représente $-CH_2C(CH_3)_2CH_2-$ $-C(CH_3)_2CH_2C(CH_3)_2-$ ou $-CH(CH_3)CH_2CH(CH_3)-$;
– A représente $-CH(CH_3)CH_2-$ ou $-CH_2CH_2-$; et
– Y = représente

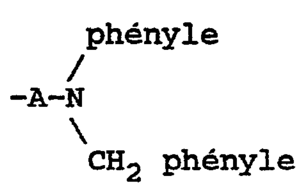 .

12. Procédé selon la revendication 11, dans lequel $X^1$ représente nitro, $X^2$ représente hydrogène.

13. Procédé selon la revendication 1, dans lequel:
– $X^1$ représente hydrogène, $X^2$ représente difluorométhoxy ou $X^1$ et $X^2$ représentent tous deux chlore;
– $-C(R^1)(R^2)C(R^3)(R^4)C(R^5)(R^6)-$ représente $-C(CH_3)_2CH_2C(CH_3)_2-$, $-CH(CH_3)CH_2CH(CH_3)-$ ou $-CH_2C(CH_3)_2CH_2)-$;

– A représente $-CH(CH_3)CH_2-$, $-CH_2CH_2-$ ou $-CH_2CH_2CH_2-$;
– $Ar^1$ et $Ar^2$, qui peuvent être identiques ou différents, représentent phényle ou p-fluorophényle; et
– Y représente

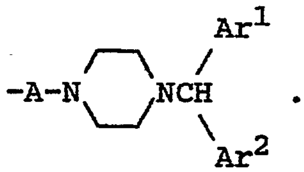

14. Procédé selon la revendication 1, dans lequel:
– $X^1$ et $X^2$ représentent tous deux chlore;
– $-C(R^1)(R^2)C(R^3)(R^4)C(R^5)(R^6)-$ représente $-CH_2C(CH_3)_2CH_2-$;
– A représente $-CH_2CH_2-$ ou $-CH_2CH_2CH_2-$;
– $Ar^1$ et $Ar^2$ représentent phényle ou p-fluorophényle; et
– Y représente

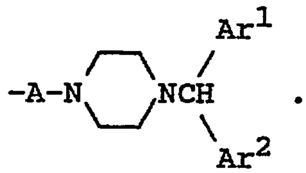

15. Procédé selon la revendication 1, qui conduit à un composé représenté par la formule:

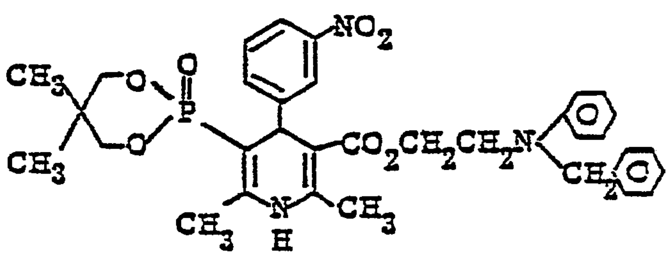

ou à un sel pharmaceutiquement acceptable de ce composé.

16. Procédé selon la revendication 1, qui conduit à un composé représenté par la formule:

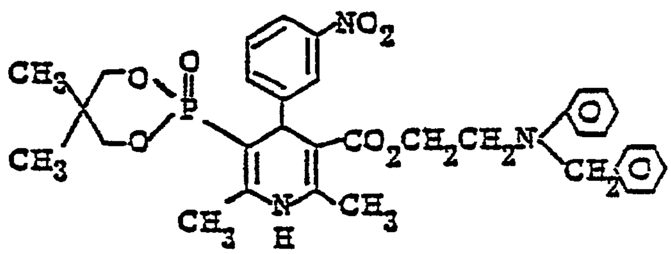 · solvant

où solvant représente benzène ou toluène.

17. Procédé selon la revendication 1, qui conduit à un solvate d'un sel pharmaceutiquement acceptable d'un composé selon la revendication 1, représenté par la formule:

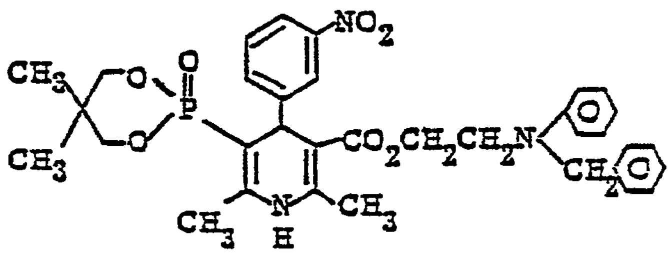 · acide · solvant

où solvant représente éthanol ou acétonitrile.

18. Procédé selon la revendication 1, qui conduit:

– au (diméthyl-2,2-propylènedioxyphosphinyl)-5 diméthyl-2,6 dihydro-1,4 (dichloro-2,3 phényl)-4 pyridine-carboxylate-3 de (diphénylméthyl-4 pipérazinyl-1)-2 éthyle;
– au (diméthyl-2,2 propylènedioxyphosphinyl)-5 diméthyl-2,6 dihydro-1,4 (dichloro-2,3 phényl)-4 pyridine-carboxylate-3 de (bis(fluoro-4 phényl)-méthyl-4 pipérazinyl-1)-3 propyle;
– au (tétraméthyl-1,1,3,3 propylènedioxyphosphinyl)-5 diméthyl-2,6 dihydro-1,4 (nitro-3 phényl)-4 pyridine-carboxylate-3 de méthyl-1 (N-benzyl-N-phénylamino)-2 éthyle;
– au (tétraméthyl-1,1,3,3 propylènedioxyphosphinyl)-5 diméthyl-2,6 dihydro-1,4 (nitro-3 phényl)-4 pyridine-carboxylate-3 de (N-benzyl-N-phénylamino)-2 éthyle;
– au (diméthyl-1(R), 3(R) propylènedioxyphosphinyl)-5 diméthyl-2,6 dihydro-1,4 (dichloro-2,3 phényl)-4 pyridine-carboxylate-3 de méthyl-1 (N-benzyl-N-phénylamino)-2 éthyle;
– au (diméthyl-1(R), 3(R) propylènedioxyphosphinyl)-5 diméthyl-2,6 dihydro-1,4 (nitro-3 phényl)-4 pyridine-carboxylate-3 de (N-benzyl-N-phénylamino)-2 éthyle;
– au (diméthyl-2,2 propylènedioxyphosphinyl)-5 diméthyl-2,6 dihydro-1,4 (dichloro-2,3 phényl)-4 pyridine-carboxylate-3 de (N,N-diphénylamino)-2 éthyle;
– au (diméthyl-2,2 propylènedioxyphosphinyl)-5 diméthyl-2,6 dihydro-1,4 (dichloro-2,3 phényl)-4 pyridine-carboxylate-3 de (diphénylméthyl-4 pipérazinyl-1)-3 propyle;
– au (diméthyl-2,2 propylènedioxyphosphinyl)-5 diméthyl-2,6 dihydro-1,4 (dichloro-2,3 phényl)-4 pyridine-carboxylate-3 de (bis(fluoro-4 phényl)méthyl-4 pipérazinyl-1)-2 propyle;
– au (diméthyl-2,2 propylènedioxyphosphinyl)-5 diméthyl-2,6 dihydro-1,4 (dichloro-2,3 phényl)-4 pyridine-carboxylate-3 de méthyl-1 (N-benzyl-N-phénylamino)-2 éthyle; ou
– au (diméthyl-2,2 propylènedioxyphosphinyl)-5 diméthyl-2,6 dihydro-1,4 (difluorométhoxy-2 phényl)-4 pyridine-carboxylate-3 de (diphénylméthyl-4 pipérazinyl-1)-2 éthyle,

ou à un sel pharmaceutiquement acceptable de ce composé, ou à un solvate du composé ou du sel.

19. Utilisation d'un composé de formule (I) tel que défini à la revendication 1, ou d'un sel pharmaceutiquement acceptable de ce composé, ou d'un solvate du composé ou du sel, pour la préparation d'une composition pharmaceutique pour le traitement de l'hypertension chez un sujet nécessitant un tel traitement.

20. Utilisation d'un composé de formule (I) tel que défini à la revendication 1, ou d'un sel pharmaceutiquement acceptable de ce composé, ou d'un solvate du composé ou du sel, pour préparation d'une composition pharmaceutique pour la production d'une vasodilatation coronarienne chez un patient nécessitant un tel traitement.

21. Utilisation d'un composé de formule (I) tel que défini à la revendication 1, ou d'un sel pharmaceutiquement acceptable de ce composé, ou d'un solvate du composé ou du sel, pour la préparation d'une composition pharmaceutique pour la production d'une vasodilatation cérébrale chez un patient nécessitant un tel traitement.